# EUROPEAN PATENT APPLICATION

(11) **EP 4 752 084 A1**
(43) Date of publication of application: **03.06.2026**
(21) Application number: 24844882.1
(22) Date of filing: 26.07.2024
(51) Int. Cl.: B65G 1/04, B65G 1/137, G06Q 10/087

(54) **CARGO UNIT RE-HITTING METHOD AND APPARATUS**

(30) Priority: 27.07.2023 CN 202310934214; 05.09.2023 CN 202311141254
(71) Applicant: Beijing Geekplus Technology Co. Ltd, Beijing 100102 (CN)
(72) Inventor: ZHU, Yuxing, Beijing 100102 (CN); WEI, Xiguang, Beijing 100102 (CN); ZHAO, Chengye, Beijing 100102 (CN); FU, Liangliang, Beijing 100102 (CN); TAN, Wenzhe, Beijing 100102 (CN); LI, Hongbo, Beijing 100102 (CN); ZHENG, Yong, Beijing 100102 (CN)
(74) Representative: De Sandre, Emanuele
(86) International application number: PCT/CN2024/107816
(87) International publication number: WO 2025/021196

(57) **Abstract**

A cargo unit re-hitting method and apparatus. The cargo unit re-hitting method comprises: acquiring a target order of a target workstation and at least one order detail in the target order; determining whether a target order detail meets an order precondition, wherein the target order detail is any one of the at least one order detail; when the target order detail meets the order precondition, determining whether an initial cargo unit of the target order detail meets a re-hitting trigger condition; and when the initial cargo unit meets the re-hitting trigger condition, performing re-hitting on the target order detail. By means of the method, a cargo unit for a target order detail is re-hit, and dynamic re-hitting optimization is performed on cargo units in storage containers, thereby increasing a hit rate of the storage containers and also improving the hit accuracy of the cargo units, thus reducing the scramble for the storage containers between workstations and improving the efficiency of sorting.

## Description

The present disclosure claims the benefit of priority of Chinese Application No. 202310934214.5 filed on July 27, 2023 and Chinese Application No. 202311141254.0 filed on September 5, 2023, the entire contents of which are incorporated by reference into the present disclosure.

### FIELD

The present disclosure relates to the technical field of warehousing, and more particularly to a goods unit re-hitting method. The present disclosure also relates to a goods unit re-hitting device, a computing device, and a computer-readable storage medium.

### BACKGROUND

In a warehousing operation scenario, various transfer devices, such as robots, are usually configured to operate in an inventory area. A process of picking and transfer usually involves procedures such as hitting and dispatching. No matter whether it is hitting first and then dispatching, or dispatching first and then hitting, once an order hits corresponding goods, the picking and transfer will be performed according to the goods hit by the order. Therefore, the picking efficiency of the goods is also related to the processing of the order.

Moreover, with the movement of intelligent devices such as robots, the picking and transfer strategy corresponding to the goods hit by the processed order is not necessarily a better choice. Therefore, there is an urgent need for a method to optimize the order hitting.

### SUMMARY

In view of this, embodiments of the present disclosure provide a goods unit re-hitting method. The present disclosure also relates to a goods unit re-hitting device, a computing device, and a computer-readable storage medium, in order to solve the above problems existing in the related art.

According to a first aspect of embodiments of the present disclosure, there is provided a goods unit re-hitting method, including:
obtaining a target order of a target workstation and at least one order detail in the target order;
judging whether a target order detail meets an order precondition, where the target order detail is any one of the at least one order detail;
judging whether an initial goods unit of the target order detail meets a re-hitting trigger condition when the target order detail meets the order precondition; and
performing re-hitting on the target order detail when the initial goods unit meets the re-hitting trigger condition.

According to a second aspect of embodiments of the present disclosure, there is provided a goods unit re-hitting device, including:
an obtaining module configured to obtain a target order of a target workstation and at least one order detail in the target order;
a first judging module configured to judge whether a target order detail meets an order precondition, where the target order detail is any one of the at least one order detail;
a second judging module configured to judge whether an initial goods unit of the target order detail meets a re-hitting trigger condition when the target order detail meets the order precondition; and
a re-hitting module configured to perform re-hitting on the target order detail when the initial goods unit meets the re-hitting trigger condition.

According to a third aspect of embodiments of the present disclosure, there is provided a computing device, including a memory, a processor and computer instructions stored in the memory and executable on the processor, and the processor is configured to perform the steps of the goods unit re-hitting method when executing the computer instructions.

According to a fourth aspect of embodiments of the present disclosure, there is provided a computer-readable storage medium storing computer instructions which are configured to perform the steps of the goods unit re-hitting method, when executed by a processor.

According to a fifth aspect of embodiments of the present disclosure, there is provided a computer program product, including a computer program, where the computer program is configured to perform the steps of the goods unit re-hitting method, when executed by a processor.

According to a sixth aspect of embodiments of the present disclosure, there is provided a computer program, where the computer program is configured to perform the steps of the goods unit re-hitting method, when executed by a processor.

The goods unit re-hitting method provided by the present disclosure includes: obtaining the target order of the target workstation and at least one order detail in the target order; judging whether the target order detail meets the order precondition, where the target order detail is any one of the at least one order detail; judging whether the initial goods unit of the target order detail meets the re-hitting trigger condition when the target order detail meets the order precondition; and performing the re-hitting on the target order detail when the initial goods unit meets the re-hitting trigger condition.

In an embodiment of the present disclosure, the order precondition and the re-hitting trigger condition are provided to perform the goods unit re-hitting on the target order detail, so that the dynamic re-hitting optimization of the goods units of the storage containers is realized, the hit rate of the storage containers is improved, and also the hit accuracy of the goods units is improved, thereby reducing the storage container contention among the workstations and improving the picking efficiency.

### BRIEF DESCRIPTION OF THE DRAWINGS

Fig. 1A is a schematic diagram of an application scenario of a goods unit re-hitting method provided by an embodiment of the present disclosure.
Fig. 1B is another schematic diagram of an application scenario of a goods unit re-hitting method provided by an embodiment of the present disclosure.
Fig. 2 is a flowchart of a goods unit re-hitting method provided by an embodiment of the present disclosure.
Fig. 3 is a processing flowchart of a goods unit re-hitting method applied to a goods box transfer scenario provided by an embodiment of the present disclosure.
Fig. 4 is another processing flowchart of a goods unit re-hitting method applied to a goods box transfer scenario provided by an embodiment of the present disclosure.
Fig. 5 is a flowchart of a goods unit re-hitting method provided by an embodiment of the present disclosure.
Fig. 6 is a processing flowchart of a method of determining a target order applied to a storage bin provided by an embodiment of the present disclosure.
Fig. 7 is a processing flowchart of a method of determining a target order applied to a goods shelf provided by an embodiment of the present disclosure.
Fig. 8 is a block diagram of a goods unit re-hitting device provided by an embodiment of the present disclosure.
Fig. 9 is a block diagram of a computing device provided by an embodiment of the present disclosure.

### DETAILED DESCRIPTION

In the following description, specific details are set forth in order to provide a thorough understanding of the present disclosure. However, the present disclosure may be implemented in many other ways different from those described here, and those skilled in the art may make similar promotion without violating the connotation of the present disclosure, so the present disclosure is not limited by the embodiments disclosed below.

Terms used in one or more embodiments of the present disclosure are for the purpose of describing specific embodiments only and are not intended to limit one or more embodiments of the present disclosure. The singular forms "a", "the" and "said" used in one or more embodiments of the present disclosure and the appended claims are also intended to include the plural form, unless the context clearly indicates other meaning. It should also be understood that the term "and/or" used in one or more embodiments of the present disclosure refers to and includes any or all possible combinations of one or more associated listed items.

It should be understood that although the terms first, second, etc. may be used to describe various information in one or more embodiments of the present disclosure, the information should not be limited to these terms. These terms are only used to distinguish the same type of information from each other. For example, without departing from the scope of one or more embodiments of the present disclosure, the first may also be called the second, and similarly, the second may also be called the first. Depending on the context, the word "if" as used herein may be interpreted as "when" or "while" or "in response to determining".

In a warehousing operation scenario, various transfer devices, such as robots, are usually configured to operate in an inventory area. A process of picking and transfer usually involves procedures such as hitting and dispatching. No matter whether it is hitting first and then dispatching, or dispatching first and then hitting, once an order hits corresponding goods, the picking and transfer will be performed according to the goods hit by the order. However, with the change of time and the movement of intelligent devices such as robots, the picking and transfer strategy corresponding to the goods hit by the previous order is not necessarily a better choice.

In the present disclosure, a goods unit re-hitting method is provided, and the present disclosure also relates to a goods unit re-hitting device, a computing device, and a computer-readable storage medium, which are described in detail one by one in the following embodiments.

In the present disclosure, the terms picking and transfer device, transfer device, robot and the like may be used interchangeably.

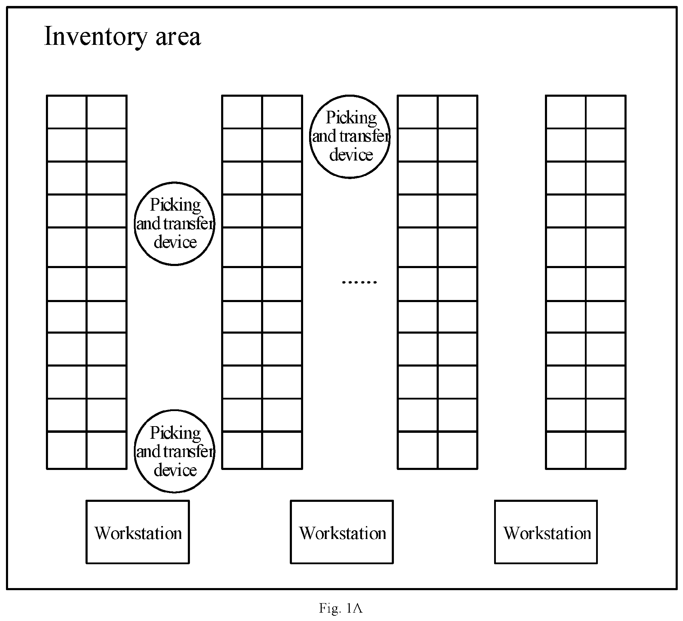

Referring to Fig. 1A, Fig. 1A shows a schematic diagram of an application scenario of a goods unit re-hitting method according to an embodiment of the present disclosure. As shown in Fig. 1A, a plurality of workstations and a plurality of goods shelves are deployed in an inventory area, a plurality of storage locations are arranged on the goods shelf, and an aisle is formed between the goods shelves for picking and transfer devices to operate. These picking and transfer devices include a picking device with a picking function and a storage function, and also include a transfer device with a transferring function. The picking device has a device temporary storage goods shelf, the device temporary storage goods shelf includes a plurality of temporary storage locations, and the temporary storage location is configured to temporarily store a goods box. The device temporary storage goods shelves of the picking device and/or the goods shelves constitute storage containers in the inventory area, that is, the storage containers may be the device temporary storage goods shelves of the picking device or the goods shelves, and an area to which the storage containers belong is a storage area.

In practical applications, due to the change of time, after a goods units in the storage container is hit by a corresponding order, it may not be a better choice for subsequent picking operations of the goods unit at the workstation. Therefore, according to operations statuses of the picking and transfer devices in the inventory area, the goods unit of each order may be re-hit based on a hitting status of the goods unit of each order, so as to realize the flexible hitting of each goods unit and improve the picking efficiency.

In some embodiments, each order in an order pool may be obtained, each order detail in the order may be traversed, and it may be judged whether each order detail meets an order precondition. In response to that the order precondition is not met, the next order detail is traversed. In response to that the order precondition is met, it may be further judged whether an initial goods unit corresponding to the order detail meets a re-hitting trigger condition. In response to that the order precondition is not met, it is not necessary to perform re-hitting on the order detail, and in response to that the order precondition is met, re-hitting may be performed for the order detail.

Through the order precondition, the orders that may be re-hit are screened in the order pool. Further, based on the re-hitting trigger condition, it is judged whether goods unit re-hitting may be performed for each order detail in the order. By setting double conditions, the process of goods unit re-hitting is executed, so as to realize dynamic re-hitting optimization, improve the hit rate of the goods unit and the hit rate of each storage container, and further improve the picking and transfer efficiency of the picking and transfer device.

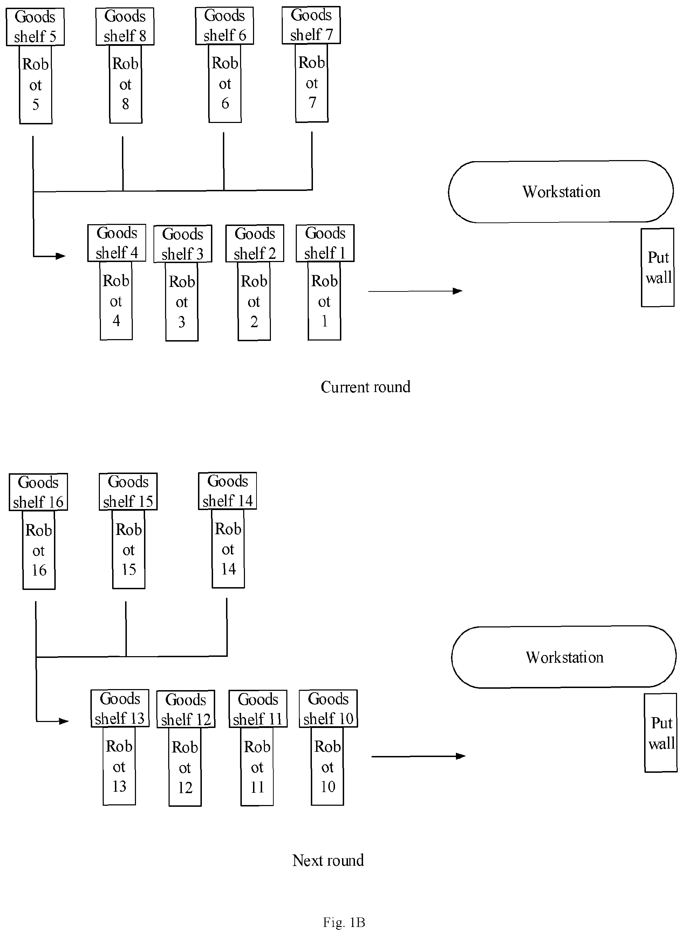

In some embodiments, the goods unit re-hitting method provided by the embodiment of the present disclosure may also be applied to a scenario shown in Fig. 1B.

As shown in Fig. 1B, Fig. 1B shows a schematic diagram of an application scenario of a goods unit re-hitting method according to an embodiment of the present disclosure, which specifically includes the following.

Based on a current order pool status, that is, an order status of each order in the order pool, an order to be processed is determined, and a goods shelf corresponding to the order to be processed is determined, including goods shelves 1-8; since each goods shelf needs a robot to complete the transfer from a warehouse to the workstation, the workstation may be assigned a transfer robot; as shown in Fig. 1B, according to a preset goods shelf number upper limit of the workstation, which is 8, robots 1-8 are called to achieve the transfer of the goods shelves, where robots 1-4 are waiting in line at the workstation for sorting, while robots 5-8 are moving to the workstation; a preset queuing ratio corresponding to the workstation, which is 0.4, an upper limit of the number of queuing robots, which is 8, and the current number of queuing robots, which is 4, are obtained, where the preset queuing ratio is preset for the workstation, and is a ratio of the number of robots in the queue to the upper limit of the number of queuing robots corresponding to the workstation; the preset queuing ratio of 0.4 is multiplied by the upper limit of the number of queuing robots, which is 8, to obtain a threshold of the number of queuing robots, which is 3.2; it is determined that the current number of queuing robots, which is 4, is greater than the threshold of the number of queuing robots, which is 3.2, and a first adjustment threshold 1 is subtracted from the preset goods shelf number upper limit corresponding to the workstation, which is 8, to obtain a target goods shelf number upper limit, which is 7, where the first adjustment threshold refers to a threshold for reducing the preset goods shelf number upper limit, and its specific value may be set according to business requirements, for example, the first adjustment threshold may be 1, 2, etc.; based on the target goods shelf number upper limit, which is 7, the next round of goods shelf processing is carried out, that is, after the workstation completes the processing of goods shelves 1-8, it acquires goods shelves 10-16 for shelf processing in the next round.

When the number of queuing robots corresponding to the workstation is 0 and the current number of goods shelves processed by the workstation is consistent with the preset goods shelf number upper limit, a second adjustment threshold may be added to the preset goods shelf number upper limit, so that the leisure workstation may be fully utilized and the order processing efficiency may be improved. The second adjustment threshold refers to a threshold configured to increase the preset goods shelf number upper limit, and its specific value may be set according to business requirements, for example, the first adjustment threshold may be 1, 2, etc. In practical applications, the values of the first adjustment threshold and the second adjustment threshold may be the same or different, for example, the values of the first adjustment threshold and the second adjustment threshold are both 1, or the first adjustment threshold is 1 and the second adjustment threshold is 2.

In the present disclosure, the current number of queuing robots and the upper limit of the number of queuing robots corresponding to the workstation are determined, so as to determine the current processing progress of the workstation; a target storage container number upper limit is generated according to the current number of queuing robots and the upper limit of the number of queuing robots; then, a target workstation is determined based on the target storage container number upper limit; and an order to be processed corresponding to a target container pool of the target workstation is processed, so that the tasks of the workstation may be evenly distributed, and the utilization rate of resources and the processing efficiency of the order to be processed may be improved.

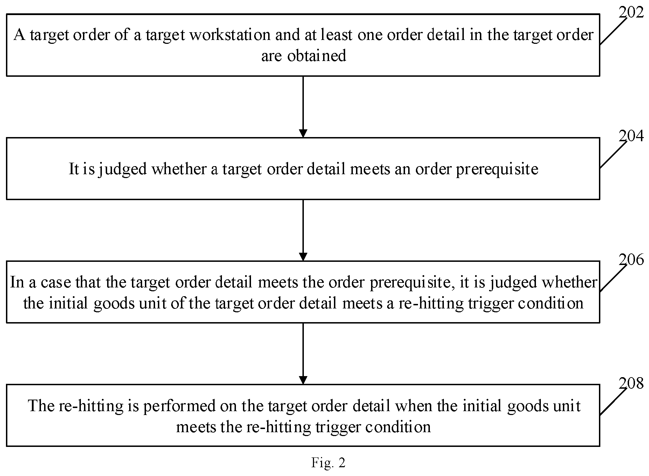

Fig. 2 shows a flowchart of a goods unit re-hitting method according to an embodiment of the present disclosure, which specifically includes the following steps.

In step 202, a target order of a target workstation and at least one order detail in the target order are obtained.

In practical applications, before hitting a goods unit, it is necessary to know each order first, and the goods unit in a storage container is hit according to the order detail in the order, so as to realize a subsequent task of picking the goods in the goods unit.

Therefore, each order in an order pool and the order detail in each order are obtained. Since different orders are picked by different workstations, in order to improve the picking efficiency, corresponding orders may be obtained from the perspective of workstations.

The target workstation refers to any workstation in the inventory area; the target order refers to any order, which has been processed, in the order pool of the target workstation; the order detail refers to a detail record configured to record various items of goods information in the target order, which may specifically include the SKU, name and quantity of the goods.

For example, there are ten orders in the order pool of workstation 1, five orders of the ten orders are orders that have already started to be processed, and the other five orders of the ten orders are orders that have not yet started to be processed. Then, all the five orders that have started to be processed are the target orders, and workstation 1 is the target workstation. For another example, if any order A is obtained from the five orders that have started to be processed, and five pieces of goods information are recorded in the order A, the order A is the target order, and the five pieces of goods information in the order A are the order details.

Further, each workstation in the inventory area is provided with a put wall, and a plurality of seeding locations are arranged on the put wall. The seeding location may be configured to place an order container, and each order container corresponds to one target order. A picker at the workstation may put the picked goods into the order container to complete the goods picking. Therefore, the target order is an order for which a corresponding order container has been assigned in the put wall.

In step 204, it is judged whether a target order detail meets an order precondition.

In practical applications, the order pool includes an order that has not entered the stage of goods picking, an order that has entered the stage of goods picking but has not hit the goods unit, and an order that has entered the stage of goods picking and has hit the goods unit. Re-hitting the goods unit means hitting the goods unit again. Therefore, the re-hitting of the goods unit needs to be carried out on the order that has entered the stage of goods picking and has hit the goods unit, and then, it is necessary to screen the orders to determine the order on which the re-hitting of the goods unit may be carried out.

The target order detail is any one of at least one order detail of the target order. The order precondition refers to a prerequisite configured to judge whether the order detail meets the re-hitting of the goods unit.

In an embodiment provided by the present disclosure, judging whether the target order detail meet the order precondition includes:
judging whether an initial goods unit exists in the target order detail;
determining position information of a storage container to which the initial goods unit belongs when the initial goods unit exists in the target order detail;
determining the number of times that the re-hitting is performed on the target order detail when it is determined that the storage container is not in a queuing area of the target workstation;
determining a process status of a picking task corresponding to the target order detail when the number of times that the re-hitting is performed on the target order detail does not reach a preset hit number threshold; and
determining whether the target order detail meets the order precondition according to the process status of the picking task.

The initial goods unit refers to a goods unit hit before current goods unit re-hitting is carried out on the target order detail. The goods unit may be a goods box configured to store goods, a goods compartment configured to store goods, a goods shelf configured to store goods boxes or a goods shelf having goods compartments. The storage container refers to a goods shelf configured to store goods units or a device temporary storage goods shelf of a picking device. In some embodiments, when the goods unit is the goods box, the storage container is the goods shelf for storing the goods boxes or the device temporary storage goods shelf of the picking device; and when the goods unit is the goods compartment, the storage container is the goods shelf corresponding to the goods compartment.

The queuing area refers to an area in each workstation that is configured for picking and transfer devices to queue. The preset hit number threshold refers to a preset upper limit of the number of times that the order detail is re-hit. The process status refers to an execution status corresponding to the picking task, for example, whether the order detail corresponding to the picking task is in a re-hit state, whether the picking task is distributed, or whether the picking task is distributed to a certain process node.

In practical applications, since the number of orders processed is different, and the number of goods units hit by each order detail is also different, there may be a case that many goods units on a certain goods shelf are hit, in which case, the goods shelf may be directly transferred to the queuing area of the workstation for queuing; and there may also be a case that only a few goods units on a certain goods shelf are hit, in which case, if the goods unit is the goods box for storing goods, the picking device may temporarily store the hit goods unit (goods box) in the device temporary storage goods shelf of the picking device, and the picking device may directly travel to the queuing area of the workstation for queuing, and if the goods unit is the goods compartment for storing goods, since the goods compartment cannot be directly removed from the goods shelf, the transfer device may transfer the goods shelf corresponding to the hit goods unit (goods compartment) to the queuing area of the workstation for queuing.

In some embodiments, it is judged whether the target order detail has hit the goods unit, that is, whether the initial goods unit exists in the target order detail. If the target order detail has hit the goods unit (there is the initial goods unit), the position information of the storage container to which the initial goods unit belongs is further determined, and based on the position information of the storage container, it is determined whether the storage container is queued in the queuing area of the target workstation. If the storage container has been queued in the queuing area of the target workstation, the goods unit re-hitting will not be performed on the target order detail. If the storage container is not queued in the queuing area of the target workstation, it means that the goods unit re-hitting may be performed on the target order detail.

Since each order detail is set with an upper limit of the number of times that the goods unit may be re-hit, when it is determined that the initial goods unit hit by the target order is not queued in the queuing area of the target workstation, the number of times that the re-hitting has been performed on the target order detail is counted. If the number of times that the re-hitting has been performed on the target order detail has reached the preset hit number threshold, the re-hitting is not performed on the target order detail. If the number of times that the re-hitting has been performed on the target order detail does not reach the preset hit number threshold, it means that the goods unit re-hitting may be performed on the target order detail.

However, since the process status of the picking task corresponding to each order detail is different, it is necessary to obtain the process status of the picking task corresponding to the target order detail, so as to determine whether the re-hitting may be performed on the target order detail according to the process status of the picking task.

Therefore, when it is determined that the number of times that the re-hitting has been performed on the target order detail does not reach the preset hit number threshold, the process status of the picking task corresponding to the target order detail is determined, and it is determined whether it is necessary to perform the goods unit re-hitting on the target order detail according to the process status.

In some embodiments, in response to that the target order detail is in the re-hit state, there is no need to perform the goods unit re-hitting on the target order detail again.

It may also be judged according to the distribution situation of the picking task, or according to the process node where the picking task is. However, due to different business capabilities of systems and different application scenarios, the requirements for re-hitting the goods unit for the same process node may be different, and may be specifically set according to the actual application situations or the business capabilities of the systems. For example, if the picking task corresponding to the target order detail has not been distributed to a control platform, it may be set that the re-hitting may be performed on the target order detail. For another example, of the picking task has been distributed to the control platform, and also, the control platform has distributed a corresponding transfer task to the picking and transfer device, but the picking and transfer device has not entered the queuing area of the target workstation for queuing, it may be set that the re-hitting may be performed on the target order detail, or the re-hitting may not be performed on the target order detail, etc. according to the business capacity of the system.

In the goods unit re-hitting method provided by the present disclosure, by setting the order precondition, the order for which the goods unit re-hitting may be performed may be determined from a mass of orders, thus reducing the workload and improving the re-hitting accuracy, while improving the goods efficiency.

In step 206, when the target order detail meets the order precondition, it is judged whether the initial goods unit of the target order detail meets a re-hitting trigger condition.

In practical applications, there may be a case that the inventory information of the storage containers that have been queued in the queuing area of the target workstation may meet a hit demand of the target order detail. If the storage container to which the goods unit hit by the target order detail belongs has not yet traveled to the queuing area of the target workstation for queuing, in order to improve the picking efficiency, the re-hitting may be performed on the target order detail preferentially in the queued storage containers.

Alternatively, there may be a case that the storage container to which the goods unit hit by the target order detail belongs is being queued in the queuing area of another workstation, and a queuing timeout has occurred. In order to improve the picking efficiency, the re-hitting may be performed on the target order detail.

Therefore, after determining that the target order detail meets the order precondition, it is necessary to further determine whether the above two cases exist for the target order detail. In some embodiments, the detection of the above cases may be realized by providing the re-hitting trigger condition, and the goods unit re-hitting may be performed on the target order detail in time based on different cases.

In an embodiment provided by the present disclosure, judging whether the initial goods unit of the target order detail meets the re-hitting trigger condition includes:
determining the position information of the storage container to which the initial goods unit belongs;
counting the inventory information of the storage containers of the target workstation when it is determined that the storage container is not in the queuing area of the target workstation;
judging whether the inventory information meets the hit demand of the target order detail; and
determining that the initial goods unit meets the re-hitting trigger condition when the inventory information meets the hit demand.

The re-hitting trigger condition refers to a condition configured to trigger execution of the goods unit re-hitting on the target order detail.

In some embodiments, it is first judged whether the storage container to which the initial goods unit hit by the target order detail belongs is queued in the queuing area of the target workstation, and if not, it is further judged whether the inventory information of the storage containers in the target workstation may meet the hit demand of the target order detail.

Therefore, the position information of the storage container to which the initial goods unit hit by the target order detail belongs is determined. Based on the position information of the storage container, it is determined whether the storage container is queued in the queuing area of the target workstation. In response to that the storage container is not queued in the queuing area of the target workstation, the inventory information of the storage containers in the target workstation is counted. In response to that the inventory information of the storage containers meets the hit demand of the target order detail, it means that the target order detail meets the re-hitting trigger condition, and the goods unit re-hitting may be performed on the target order detail.

Further, in another embodiment provided by the present disclosure, judging whether the initial goods unit of the target order detail meets the re-hitting trigger condition includes:
determining the position information of the storage container to which the initial goods unit belongs;
determining whether that storage contain is in a queuing area of a reference workstation based on the position information;
calculating a waiting completion time of the storage container when the storage container is in the queuing area of the reference workstation, where the waiting completion time refers to the time required for the storage container to queue from its current position to the front and complete the picking task; and
determining that the initial goods unit meets the re-hitting trigger condition when the waiting completion time reaches a preset time threshold.

The reference workstation refers to any other workstation except the target workstation. The waiting completion time refers to the time required for the storage container to queue from its current position to the front in the queuing area of the reference workstation and complete the picking task. The waiting completion time may be calculated and estimated according to the number of storage containers queued in the reference workstation and a picking speed of the reference workstation.

For example, the storage container is the goods shelf, goods shelf H1 is queued in the queuing area of workstation 2, and goods shelf H1 ranks seventh. If it takes 1 minute for one goods shelf to complete the picking task in workstation 2, it takes 6 minutes for goods shelf H1 to queue from a seventh place to the first place, and it takes 1 minute for goods shelf H1 to complete the picking task. Therefore, the waiting completion time for goods shelf H1 in workstation 2 is 7 minutes.

The preset time threshold refers to a preset upper limit of the waiting completion time. The preset time threshold may be determined with reference to a time taken for a new storage container to be transferred from the storage area to the target workstation or to travel from the storage area to the target workstation. For example, if it takes 3 minutes for the new storage container to travel from the storage area to the target workstation, the preset time threshold may be set to 3 minutes, 4 minutes, and so on.

In some embodiments, the position information of the storage container to which the initial goods unit belongs is first determined; then it is judged whether the storage container is queued in the queuing area of another workstation according to the position information of the storage container; if so, the waiting completion time of the storage container is calculated based on the current position of the storage container in the queuing area of the workstation and the picking speed of the workstation; and the waiting completion time of the storage container is compared with the preset time threshold. It is judged whether the waiting completion time of the storage container reaches the preset time threshold, and if it does, it means that the time for the storage container to be queued in the queuing area of another workstation has expired, and the re-hitting needs to be performed on the target order detail, that is, the initial goods unit corresponding to the target order detail meets the re-hitting trigger condition.

In practical applications, since the goods in the storage container is picked by a corresponding picker at each workstation, and different pickers have different picking speeds, that is, each workstation corresponds to a different picking capacity, it is inevitable that the calculation of the waiting completion time of the storage container may be inaccurate due to the different picking capacities of the workstations.

For example, the waiting completion time of storage container R1 is estimated to be long, the re-hitting is performed on the target order detail corresponding to storage container R1, and the storage container after the re-hitting is storage container R2. However, due to the large number of storage containers queued in the queuing area of the target workstation, the time for storage container R2 after the re-hitting to enter the queuing area of the target workstation for queuing is longer than the waiting completion time for storage container R1. In this case, it will appear that the time for the storage container after the re-hitting to complete the picking task is longer than the time for the storage container before the re-hitting to complete the picking task, that is, the picking efficiency after the re-hitting is lower than the picking efficiency before the re-hitting.

In order to avoid the above case, and improve the picking efficiency and re-hitting efficiency, the number of picking and transfer devices queuing in the target workstation may be counted first, and then it is determined whether to perform the re-hitting according to the number of queuing picking and transfer devices.

In another embodiment provided by the present disclosure, determining the position information of the storage container to which the initial goods unit belongs includes:
counting the number of picking and transfer devices in the queuing area in the target workstation;
determining whether the number of picking and transfer devices reaches a preset device number threshold; and
determining the position information of the storage container to which the initial goods unit belongs when the number of picking and transfer devices does not reach the preset device number threshold.

The preset device number threshold refers to a preset upper limit of the range of picking and transfer devices queuing in the workstation, and the preset device number threshold is determined according to a queuing upper limit of picking and transfer devices that may queue in the workstation.

When the storage container to which the initial goods unit hit by the target order detail belongs is queued at another workstation and the queuing time has expired, the re-hitting may be performed on the target order detail. Since it also takes time for the storage container to which the goods unit belongs after the re-hitting to be queued in the queuing area of the target workstation, the preset device number threshold may be set according to actual situations. For example, the preset device number threshold is set to be one third, one quarter, etc. of the queuing upper limit of the picking and transfer devices that may queue in the target workstation. More specifically, for example, the preset device number threshold is set to be one third of the queuing upper limit of the picking and transfer devices that may queue in the target workstation. If the queuing upper limit of the picking and transfer devices that may queue in the target workstation is 12, the preset device number threshold is 4.

In some embodiments, the picking and transfer devices queuing in the queuing area in the target workstation are counted, the number of the picking and transfer devices is determined, the number of the picking and transfer devices is compared with the preset device number threshold, and the position information of the storage container to which the initial goods unit belongs is further determined when the number of the picking and transfer devices does not reach the preset device number threshold. According to the position information of the storage container, it is judged whether the storage container is queued in the queuing area of another workstation. If so, the waiting completion time of the storage container is calculated based on the queuing time of the storage container in the workstation and the current time, the waiting completion time of the storage container is compared with the preset time threshold, and it is judged whether the waiting completion time of the storage container reaches the preset time threshold. If so, it means that the time for the storage container to be queued in the queuing area of another workstation has expired, and the re-hitting needs to be performed on the target order detail, that is, the initial goods unit corresponding to the target order detail meets the re-hitting trigger condition.

If the number of the picking and transfer devices reaches the preset device number threshold, it means that there are many picking and transfer devices queuing in the queuing area of the target workstation. In this case, the goods unit re-hitting will not be performed for the target order in the target workstation.

The goods unit re-hitting method provided by the present disclosure comprehensively considers whether the inventory information of the storage containers of the current workstation meets the hit demand of the target order detail and whether the storage container hit by the target order detail is queued in another workstation and the queuing timeout occurs, and may perform the goods unit re-hitting on the target order detail respectively based on different cases, thus realizing the flexibility and accuracy of the goods unit re-hitting.

In step 208, the re-hitting is performed on the target order detail when the initial goods unit meets the re-hitting trigger condition.

After determining that the target order detail meets the order precondition, the re-hitting trigger condition of the target order detail is further analyzed, so that the goods unit re-hitting may be performed on the target order detail according to different re-hitting trigger cases.

In the case that the inventory information of the storage containers in the target workstation may meet the hit demand of the target order detail, and the storage container hit by the target order detail is queued in the queuing area of another workstation, the goods unit re-hitting is performed on the target order detail in a following manner.

In an embodiment provided by the present disclosure, performing the re-hitting on the target order detail includes:
obtaining process information of an initial picking task of the target order detail;
cancelling the initial picking task according to the process information;
determining a target goods unit of the target order detail in the storage containers of the target workstation based on the inventory information; and
generating a target picking task of the target order detail based on the target order detail and the target goods unit.

The initial picking task refers to a picking task corresponding to the target order detail before the current goods unit re-hitting. The process information specifically refers to the information of process nodes where the initial picking task is executed, including distribution information of the initial picking task and the position information of the picking and transfer device.

The target goods unit refers to a goods unit hit by the target order detail after the goods unit re-hitting. The target picking task refers to a picking task corresponding to the target order detail after the goods unit re-hitting.

In some embodiments, due to different process information of the picking tasks, corresponding operations processed during the re-hitting are different. Before performing the goods unit re-hitting on the target order detail, it is necessary to obtain the process information of the initial picking task corresponding to the target order detail, so that a corresponding task cancellation processing operation may be performed on the initial picking task according to the process information of the initial picking task. After cancelling the initial picking task, a new picking task needs to be generated for the target order detail.

Since the inventory information of the storage containers in the target workstation may meet the hit demand of the target order detail, and the storage container hit by the target order detail is queued in the queuing area of another workstation, the target goods unit of the target order detail may be determined preferentially in the storage containers queued in the target workstation according to the inventory information of the storage containers in the target workstation. Furthermore, based on the target order detail and the target goods unit, the new picking task corresponding to the target order detail is generated, that is, the target picking task.

In the case that the storage container to which the initial goods unit hit by the target order detail belongs is queued in another workstation and the queuing timeout occurs, the goods unit re-hitting is performed on the target order detail in a following manner.

In another embodiment provided by the present disclosure, performing the re-hitting on the target order detail includes:
obtaining process information of an initial picking task of the target order detail and inventory information of storage containers in the storage area;
cancelling the initial picking task according to the process information;
determining a target goods unit of the target order detail in the storage containers in the storage area based on the inventory information; and
generating a target picking task of the target order detail based on the target order detail and the target goods unit.

Accordingly, due to different process information of the picking tasks, corresponding operations processed during the re-hitting are different. Before performing the goods unit re-hitting on the target order detail, it is necessary to obtain the process information of the initial picking task corresponding to the target order detail, so that a corresponding task cancellation processing operation may be performed on the initial picking task according to the process information of the initial picking task. After cancelling the initial picking task, a new picking task needs to be generated for the target order detail.

Since the storage container hit by the target order detail is queued in another workstation and the queuing timeout occurs, which means that the storage container is being contested by another workstation, in order to improve the picking efficiency, the target goods unit of the target order detail may be determined preferentially in the storage containers in the storage area. Therefore, it is necessary to obtain the inventory information of the storage containers in the storage area, and determine the target goods unit of the target order detail in the storage containers in the storage area based on the inventory information. Furthermore, based on the target order detail and the target goods unit, the new picking task corresponding to the target order detail is generated, that is, the target picking task.

Further, in an embodiment provided by the present disclosure, after generating the target picking task of the target order detail, the method further includes:
sending the target picking task to a control platform.

The control platform is configured to send a task execution instruction to the picking and transfer device.

After performing the goods unit re-hitting on the target order detail and determining the target goods unit of the target order detail, the target picking task of the target order detail is generated based on the target order detail and the target goods unit, and the target picking task is sent to the control platform, so that the control platform may send the target picking task to the corresponding picking and transfer device to complete the target picking task.

The task cancellation processing of the initial picking task of the target order detail is generally related to the process information of the initial picking task, and has nothing to do with the re-hitting trigger condition of the target order detail. Specifically, according to the process information of the initial picking task, the task cancellation processing of the initial picking task is realized as follows.

In an embodiment provided by the present disclosure, according to the process information, the task cancellation processing for the initial picking task includes:
cancelling the initial picking task when the initial picking task has not been sent to the control platform;
when the initial picking task is sent to the control platform, and the control platform does not send an initial transfer task corresponding to the initial picking task to the picking and transfer device, cancelling the initial picking task and cancelling the initial transfer task;
acquiring position information of the picking and transfer device, when the initial picking task is sent to the control platform and the control platform sends the initial transfer task corresponding to the initial picking task to the picking and transfer device; and
cancelling the initial picking task based on the position information of the picking and transfer device.

In some embodiments, it is first determined whether a server sends the initial picking task to the control platform, and when the initial picking task has not been sent to the control platform, the initial picking task may be directly cancelled; when the server has sent the initial picking task to the control platform, but the control platform has not sent the initial picking task to the picking and transfer device, the initial picking task may be cancelled, and also the transfer task for the picking and transfer device may be cancelled; when the server has sent the initial picking task to the control platform, and the control platform has sent the initial picking task to the picking and transfer device, it is necessary to judge whether the picking and transfer device has started to execute the transfer task corresponding to the initial picking task. Therefore, it is necessary to further obtain the position information of the picking and transfer device, so that the task cancellation processing operation may be continued according to the position information of the picking and transfer device, which is realized as follows.

In an embodiment provided by the present disclosure, based on the position information of the picking and transfer device, the task cancellation processing for the initial picking task includes:
determining whether the picking and transfer device is in the queuing area of the workstation based on the position information of the picking and transfer device;
cancelling the initial picking task and generating a return task for the picking and transfer device, when the picking and transfer device is not in the queuing area of the workstation; and
cancelling the initial picking task, cancelling the initial transfer task, and generating the return task for the picking and transfer device, when the picking and transfer device is in the queuing area of the workstation.

In some embodiments, according to the position information of the picking and transfer device, it is determined whether the picking and transfer device has entered the queuing area of the workstation for queuing. In response to that the picking and transfer device has not entered the queuing area of the workstation for queuing, it is necessary to cancel the initial picking task, cancel the transfer task for the picking and transfer device, and also generate the return task for the picking and transfer device, so that the picking and transfer device may transfer the storage container to which the initial goods unit belongs to the storage area.

In response to that the picking and transfer device has entered the queuing area of the workstation for queuing, it is also necessary to cancel the initial picking task, cancel the transfer task for the picking and transfer device, and also generate the return task for the picking and transfer device. However, since the queuing area of the workstation provides unidirectional access to a picking point of the workstation, after the return task is generated for the picking and transfer device, the picking and transfer device will pass through the picking point of the workstation and then return to the storage area.

According to the goods unit re-hitting method provided by the present disclosure, after determining that the initial goods unit is not an optimal processing mode for the initial picking task, the goods unit re-hitting is performed on the target order detail, so that the dynamic re-hitting optimization of the goods units of the storage containers is realized, the hit rate of the storage containers is improved, and also the hit accuracy of the goods units is improved, thereby reducing the storage container contention among the workstations and improving the picking efficiency.

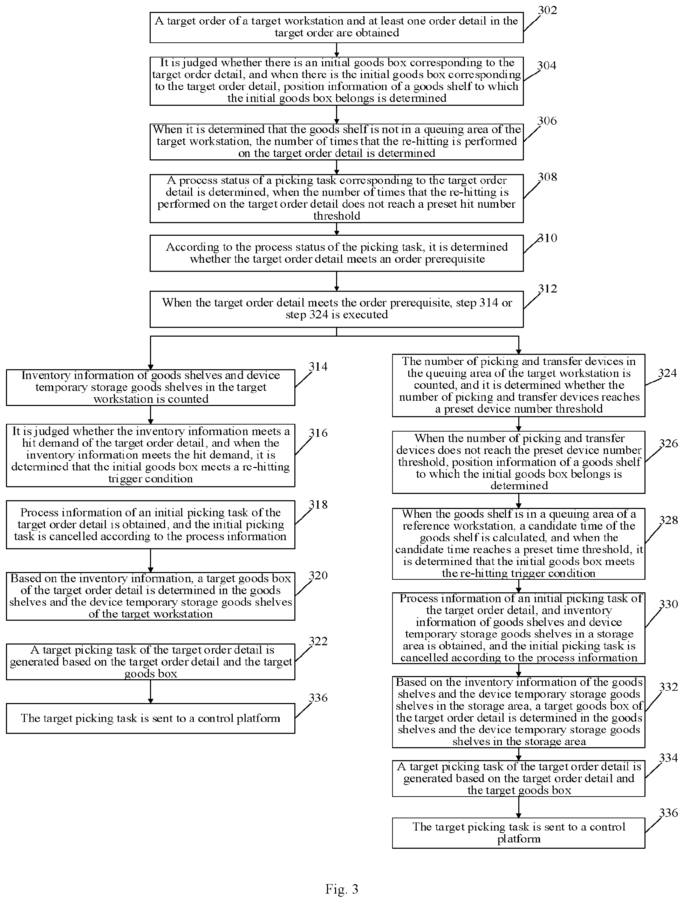

With reference to Fig. 3, for example, the goods unit re-hitting method provided by the present disclosure is applied to a goods box transfer scenario, and the goods unit re-hitting method is further explained below. Fig. 3 shows a processing flowchart of a goods unit re-hitting method applied to a goods box transfer scenario provided by an embodiment of the present disclosure, which specifically includes the following steps.

In step 302, a target order of a target workstation and at least one order detail in the target order are obtained.

In step 304, it is judged whether there is an initial goods box corresponding to the target order detail, and when there is the initial goods box corresponding to the target order detail, position information of a goods shelf to which the initial goods box belongs is determined.

In step 306, when it is determined that the goods shelf is not in a queuing area of the target workstation, the number of times that the re-hitting is performed on the target order detail is determined.

In step 308, a process status of a picking task corresponding to the target order detail is determined, when the number of times that the re-hitting is performed on the target order detail does not reach a preset hit number threshold.

In step 310, according to the process status of the picking task, it is determined whether the target order detail meets an order precondition.

In step 312, when the target order detail meets the order precondition, step 314 or step 324 is executed.

In step 314, inventory information of goods shelves and device temporary storage goods shelves in the target workstation is counted.

In step 316, it is judged whether the inventory information meets a hit demand of the target order detail, and when the inventory information meets the hit demand, it is determined that the initial goods box meets a re-hitting trigger condition.

In step 318, process information of an initial picking task of the target order detail is obtained, and the initial picking task is cancelled according to the process information.

In step 320, based on the inventory information, a target goods box of the target order detail is determined in the goods shelves and the device temporary storage goods shelves of the target workstation.

In step 322, a target picking task of the target order detail is generated based on the target order detail and the target goods box.

In step 324, the number of picking and transfer devices in the queuing area of the target workstation is counted, and it is determined whether the number of picking and transfer devices reaches a preset device number threshold.

In step 326, when the number of picking and transfer devices does not reach the preset device number threshold, position information of a goods shelf to which the initial goods box belongs is determined.

In step 328, when the goods shelf is in a queuing area of a reference workstation, a waiting completion time of the goods shelf is calculated, and when the waiting completion time reaches a preset time threshold, it is determined that the initial goods box meets the re-hitting trigger condition.

In step 330, process information of an initial picking task of the target order detail, and inventory information of goods shelves and device temporary storage goods shelves in a storage area is obtained, and the initial picking task is cancelled according to the process information.

In step 332, based on the inventory information of the goods shelves and the device temporary storage goods shelves in the storage area, a target goods box of the target order detail is determined in the goods shelves and the device temporary storage goods shelves in the storage area.

In step 334, a target picking task of the target order detail is generated based on the target order detail and the target goods box.

In step 336, the target picking task is sent to a control platform.

According to the goods unit re-hitting method provided by the present disclosure, after determining that the initial goods unit is not an optimal processing mode for the initial picking task, the goods unit re-hitting is performed on the target order detail, so that the dynamic re-hitting optimization of the goods units of the storage containers is realized, the hit rate of the storage containers is improved, and also the hit accuracy of the goods units is improved, thereby reducing the storage container contention among the workstations and improving the picking efficiency.

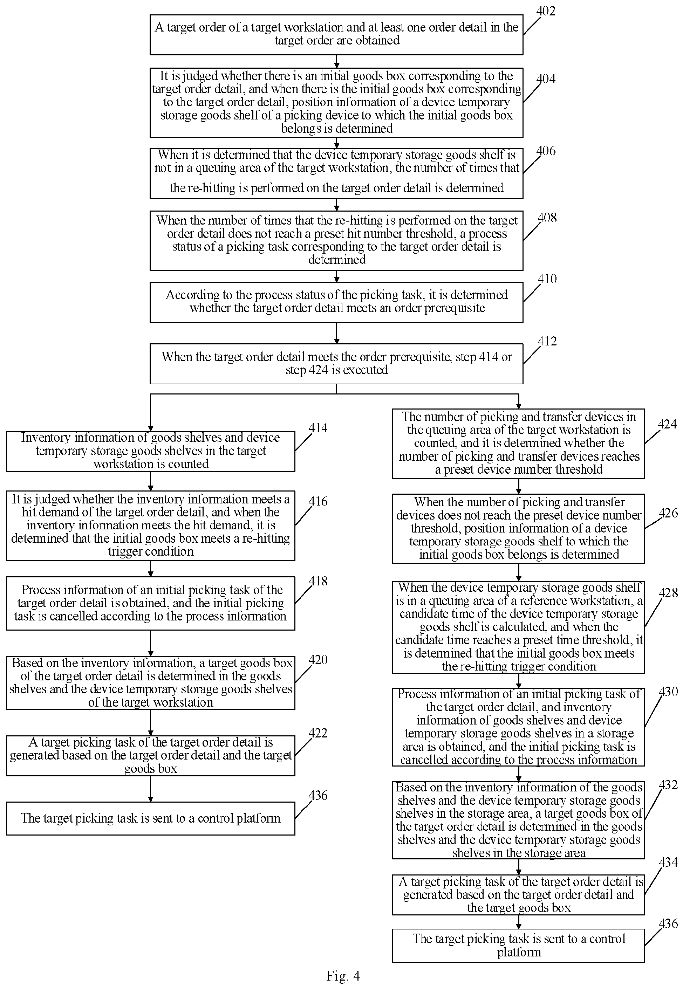

With reference to Fig. 4, for example, the goods unit re-hitting method provided by the present disclosure is applied to a goods box transfer scenario, and the goods unit re-hitting method is further explained below. Fig. 4 shows another processing flowchart of a goods unit re-hitting method applied to a goods box transfer scenario provided by an embodiment of the present disclosure, which specifically includes the following steps.

In step 402, a target order of a target workstation and at least one order detail in the target order are obtained.

In step 404, it is judged whether there is an initial goods box corresponding to the target order detail, and when there is the initial goods box corresponding to the target order detail, position information of a device temporary storage goods shelf of a picking device to which the initial goods box belongs is determined.

In step 406, when it is determined that the device temporary storage goods shelf is not in a queuing area of the target workstation, the number of times that the re-hitting is performed on the target order detail is determined.

In step 408, when the number of times that the re-hitting is performed on the target order detail does not reach a preset hit number threshold, a process status of a picking task corresponding to the target order detail is determined.

In step 410, according to the process status of the picking task, it is determined whether the target order detail meets an order precondition.

In step 412, when the target order detail meets the order precondition, step 414 or step 424 is executed.

In step 414, inventory information of goods shelves and device temporary storage goods shelves in the target workstation is counted.

In step 416, it is judged whether the inventory information meets a hit demand of the target order detail, and when the inventory information meets the hit demand, it is determined that the initial goods box meets a re-hitting trigger condition.

In step 418, process information of an initial picking task of the target order detail is obtained, and the initial picking task is cancelled according to the process information.

In step 420, based on the inventory information, a target goods box of the target order detail is determined in the goods shelves and the device temporary storage goods shelves of the target workstation.

In step 422, a target picking task of the target order detail is generated based on the target order detail and the target goods box.

In step 424, the number of picking and transfer devices in the queuing area of the target workstation is counted, and it is determined whether the number of picking and transfer devices reaches a preset device number threshold.

In step 426, when the number of picking and transfer devices does not reach the preset device number threshold, position information of a device temporary storage goods shelf to which the initial goods box belongs is determined.

In step 428, when the device temporary storage goods shelf is in a queuing area of a reference workstation, a waiting completion time of the device temporary storage goods shelf is calculated, and when the waiting completion time reaches a preset time threshold, it is determined that the initial goods box meets the re-hitting trigger condition.

In step 430, process information of an initial picking task of the target order detail, and inventory information of goods shelves and device temporary storage goods shelves in a storage area is obtained, and the initial picking task is cancelled according to the process information.

In step 432, based on the inventory information of the goods shelves and the device temporary storage goods shelves in the storage area, a target goods box of the target order detail is determined in the goods shelves and the device temporary storage goods shelves in the storage area.

In step 434, a target picking task of the target order detail is generated based on the target order detail and the target goods box.

In step 436, the target picking task is sent to a control platform.

According to the goods unit re-hitting method provided by the present disclosure, after determining that the initial goods unit is not an optimal processing mode for the initial picking task, the goods unit re-hitting is performed on the target order detail, so that the dynamic re-hitting optimization of the goods units of the storage containers is realized, the hit rate of the storage containers is improved, and also the hit accuracy of the goods units is improved, thereby reducing the storage container contention among the workstations and improving the picking efficiency.

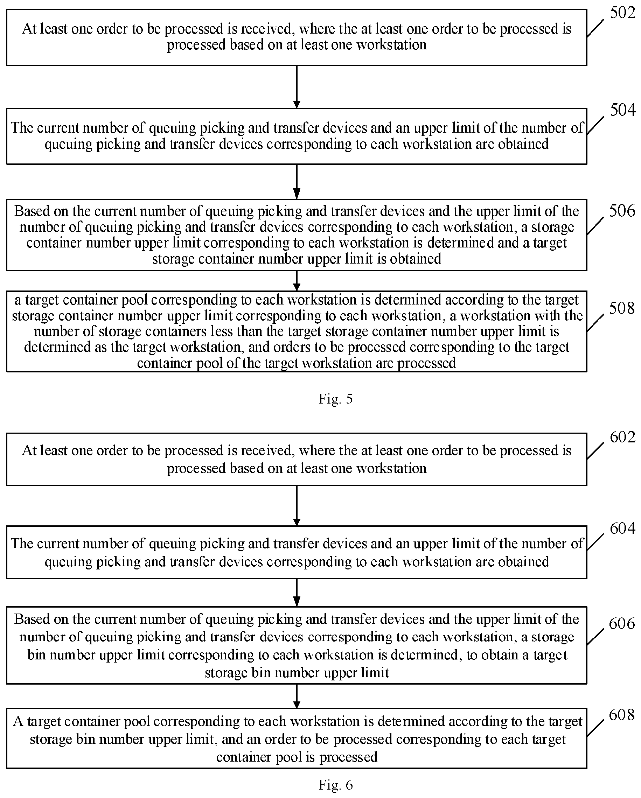

Fig. 5 shows a flowchart of a goods unit re-hitting method according to an embodiment of the present disclosure. Before obtaining the target order of the target workstation, the method further includes a process of determining the target order in at least one order to be processed, and specifically includes the following steps.

In step 502, at least one order to be processed is received, where the at least one order to be processed is processed based on at least one workstation.

The order to be processed refers to an order containing goods to be processed and a quantity of goods corresponding to the goods to be processed. In practical applications, when there are many orders to be processed, the orders to be processed need to be processed in batches, and thus the at least one order to be processed contains orders to be processed in each round. The workstation refers to an area that completes picking operations of the goods in the order, and the area may be equipped with relevant devices to complete the picking operation, including but not limited to a put wall.

In some embodiments, one or more orders may be received, and unprocessed orders of multiple orders are taken as orders to be processed. Each order to be processed may be processed by one or more workstations. For example, order 1 to be processed and order 2 to be processed are processed by workstation 1, and order 3 to be processed is processed by workstation 2, so as to pick the goods in the orders to be processed.

In practical applications, an order may be randomly selected from the unprocessed orders as the order to be processed, or the order to be processed may also be determined in other manners. In order to improve the picking efficiency, the order to be processed may be filtered from the orders based on the conditions of the storage containers.

In some embodiments, receiving the at least one order to be processed may include:
determining a storage container set according to an order pool status;
filtering at least one target storage container from the storage container set; and
taking an order corresponding to each target storage container as the order to be processed.

The order pool status refers to a processing status corresponding to each order in an order pool, including a processed status and an unprocessed status. For example, an order in the unprocessed status refers to an order that does not pre-hit a storage container corresponding to the goods in the order. The storage container set refers to a set of storage containers, and the storage container refers to a goods shelf or a storage bin where the goods in the order are stored. The target storage container refers to a container filtered from the storage containers in the storage container set.

In some embodiments, an order status of each order in an order pool is determined, and an order in an unprocessed status is determined; according to goods in the order in the unprocessed status, each storage container storing the goods in the order is determined; a storage container set is generated based on the determined storage container; any storage container is selected from the storage container set as the target storage container; and one or more orders corresponding to the target storage container are taken as the orders to be processed.

In an embodiment of the present disclosure, unprocessed orders 1, 2 and 3 are determined according to the order statuses; the storage containers corresponding to the goods in order 1, order 2 and order 3 constitute the storage container set; the storage container set includes storage container a, storage container b and storage container c; storage container a in the storage container set is selected as the target storage container; and it is determined that the orders to be processed corresponding to storage container a are order 1, order 4 and order 5, at least one of order 1, order 4 and order 5 may be selected as the order to be processed.

The storage container set is determined based on the order pool status, the target storage container is selected from the storage container set, and the order corresponding to the target storage container is taken as the order to be processed, so that the order to be processed is selected based on the processing situation of the storage containers, and thus the processing efficiency of the orders is improved.

Further, in order to ensure the full utilization of the storage containers, a storage container with a higher hit rate may be selected from the storage container set as the target storage container based on a preset hit rate threshold.

In some embodiments, the method of filtering the target storage container from the storage container set may include:
determining a preset hit rate threshold; and
selecting a storage container with a preset hit rate greater than the preset hit rate threshold from the storage container set as the target storage container.

The preset hit rate threshold refers to a threshold configured to select the target storage container from the storage container set. For example, the preset hit rate threshold is determined to be 8, and selecting the storage container with the preset hit rate greater than the preset hit rate threshold from the storage container set may be selecting storage container a with a preset hit rate of 9 as the target storage container.

In some embodiments, the preset hit rate threshold may be set according to actual business requirements, and the hit rate corresponding to each storage container in the storage container set may be determined, that is, an order line count of an order that may be hit by the storage container; and the storage container with the hit rate greater than the preset hit rate threshold is selected from the storage container set as the target storage container. In addition, according to the hit rates corresponding to the storage containers in the storage container set, the storage containers may be ranked in a descending order of the hit rates, and the storage container at the head of the queue, that is, the storage container with the highest hit rate, may be selected as the target storage container.

In an embodiment of the present disclosure, the preset hit rate threshold is determined to be 8; it is determined that the hit rate corresponding to storage container 1 is 5, the hit rate corresponding to storage container 2 is 7 and the hit rate corresponding to storage container 3 is 9 in the storage container set; and according to the preset hit rate threshold of 8, storage container 3 with the hit rate greater than the preset hit rate threshold is selected from the storage container set as the target storage container.

In another embodiment of the present disclosure, it is determined that the hit rate corresponding to storage container 4 is 7, the hit rate corresponding to storage container 2 is 8 and the hit rate corresponding to storage container 3 is 9 in the storage container set; and the storage containers are ranked in the descending order of the hit rates, and storage container 3 with the highest hit rate is selected as the target storage container.

The target storage container with the higher hit rate is selected, and the order corresponding to the target storage container is taken as the order to be processed, so that the order to be processed may be selected based on the situation of the storage containers, and subsequently, the processing efficiency of the orders to be processed may be improved.

In step 504, the current number of queuing picking and transfer devices and an upper limit of the number of queuing picking and transfer devices corresponding to each workstation are obtained.

The current number of queuing picking and transfer devices corresponding to each workstation may be the number of picking and transfer devices in the queuing area in each workstation.

In some embodiments, the current number of queuing picking and transfer devices corresponding to each workstation may be the current number of queuing robots corresponding to each workstation.

The current number of queuing picking and transfer devices refers to the number of robots waiting in line for the workstation to pick goods at the current moment; and the upper limit of the number of queuing picking and transfer devices refers to the preset number of queuing robots. In practical applications, in response to that the number of queuing robots at the workstation reaches the upper limit of the number of queuing robots, the workstation will not call new robots to the workstation.

In some embodiments, the upper limit of the number of queuing robots corresponding to the workstation is obtained, and the number of robots queuing at the workstation at the current moment is counted to obtain the current number of queuing robots.

In an embodiment of the present disclosure, workstation a is determined; an upper limit, which is 10, of the number of queuing robots corresponding to workstation a is obtained; and an acquisition request for the number of queuing robots is received, and in response to the acquisition request, the number, which is 5, of robots queuing at workstation a at the current moment is counted as the current number of queuing robots.

In practical applications, in order to transfer the storage container to the workstation, it is necessary to assign the device for transferring the storage container to each workstation.

In some embodiments, before obtaining the current number of queuing picking and transfer devices and the upper limit of the number of queuing picking and transfer devices corresponding to each workstation, the method further includes:
determining a target order to be processed from at least one order to be processed corresponding to the target storage container; and
assigning a picking and transfer device to the target storage container to execute the target order to be processed.

The target order to be processed refers to any one of the orders corresponding to the target storage container; and the picking and transfer device refers to a device configured to transfer storage containers, such as a device for transferring goods shelves, a device for transferring storage bins, a transfer robot, and the like.

In some embodiments, the target storage container determined from the storage container set corresponds to one or more orders to be processed; the target order to be processed is selected from the orders to be processed; and the target storage container of the target order to be processed is determined, and a transfer device for transferring the target storage container is assigned to process the target order to be processed.

In an embodiment of the present disclosure, order 1 to be processed, order 2 to be processed and order 3 to be processed corresponding to target storage container A are determined; order 1 to be processed is selected as the target order to be processed, order 1 to be processed corresponding to target storage container a is determined, and the transfer device for transferring target storage container a is assigned to execute order 1 to be processed.

By obtaining the current number of queuing picking and transfer devices and the upper limit of the number of queuing picking and transfer devices corresponding to each workstation, the current processing situation of each workstation may be determined based on the current number of queuing picking and transfer devices and the upper limit of the number of queuing picking and transfer devices, which is convenient for assigning tasks to the workstations based on the processing situation of the workstations in the future.

In step 506, based on the current number of queuing picking and transfer devices and the upper limit of the number of queuing picking and transfer devices corresponding to each workstation, a storage container number upper limit corresponding to each workstation is determined and a target storage container number upper limit is obtained.

The storage container number upper limit refers to the number of storage containers determined according to the current number of queuing robots and the upper limit of the number of queuing robots at the workstation, or the preset number of storage containers. In practical applications, a preset storage container number upper limit may be set for each workstation according to business requirements. The current number of queuing robots and the upper limit of the number of queuing robots corresponding to the workstation are determined, and it is judged whether the preset storage container number upper limit corresponding to the workstation meets an adjustment condition based on the current number of queuing robots and the upper limit of the number of queuing robots. When the preset storage container number upper limit meets the adjustment condition, the preset storage container number upper limit is adjusted to obtain the storage container number upper limit corresponding to the workstation. When the preset storage container number upper limit does not meet the adjustment condition, the preset storage container number upper limit is taken as the storage container number upper limit corresponding to the workstation. The target storage container number upper limit refers to a number upper limit of the storage containers that the workstation may call.

In some embodiments, the current number of queuing robots and the upper limit of the number of queuing robots corresponding to each workstation are determined; the current number of queuing robots corresponding to the workstation is compared with the upper limit of the number of queuing robots corresponding to the workstation; in response to that the current number of queuing robots is less than or equal to the upper limit of the number of queuing robots, the preset storage container number upper limit corresponding to the workstation may be taken as the target storage container number upper limit, and when the current number of queuing robots is equal to the upper limit of the number of queuing robots, the workstation will not call new robots, so that the current number of queuing robots does not exceed the upper limit of the number of queuing robots.

Further, in order to distribute tasks to each workstation more evenly, the queuing situation of robots at each workstation may be determined every preset duration. Therefore, the tasks may be handled by the workstation with a small amount of tasks at present.

In some embodiments, the storage container number upper limit corresponding to each workstation is determined based on the current number of queuing robots and the upper limit of the number of queuing robots corresponding to each workstation, and the method of obtaining the target storage container number upper limit may include:
according to a preset queuing ratio of the target workstation and a target upper limit of the number of queuing picking and transfer devices, determining a threshold of the number of queuing picking and transfer devices; and
determining the target storage container number upper limit of the target workstation based on the preset storage container number upper limit and a first adjustment threshold when the current number of queuing picking and transfer devices of the target workstation is greater than the threshold of the number of queuing picking and transfer devices.

A queuing ratio refers to a ratio of the current number of queuing robots to the upper limit of the number of queuing robots. The preset queuing ratio refers to an upper limit of the ratio of the current number of queuing robots to the upper limit of the number of queuing robots. Exceeding the preset queuing ratio means that the workload of the current workstation is heavy, and the number of storage containers to be called by the workstation may be reduced.

The target workstation refers to any workstation that processes orders. A target upper limit of the number of queuing robots refers to the upper limit of the number of queuing robots corresponding to the target workstation. The threshold of the number of queuing robots refers to a number threshold calculated according to the preset queuing ratio and the target upper limit of the number of queuing robots, and is configured for determining whether the preset storage container number upper limit of the target workstation needs to be adjusted. The preset storage container number upper limit refers to an upper limit of the storage containers obtained in one round, which is set for the target workstation. The first adjustment threshold refers to an adjustment value for the preset storage container number upper limit when the current number of queuing robots is greater than the threshold of the number of queuing robots.

In some embodiments, one workstation is randomly determined from the workstations as the target workstation; the preset queuing ratio and the target upper limit of the number of queuing robots corresponding to the target workstation are obtained; the threshold of the number of queuing robots is calculated according to the preset queuing ratio and the target upper limit of the number of queuing robots, that is, the target upper limit of the number of queuing robots is multiplied by the preset queuing ratio to obtain the threshold of the number of queuing robots corresponding to the target workstation; the current number of queuing robots corresponding to the target workstation is determined, and the current number of queuing robots is compared with the threshold of the number of queuing robots. When the current number of queuing robots is greater than the threshold of the number of queuing robots, the value of the first adjustment threshold may be subtracted from the preset storage container number upper limit corresponding to the workstation to obtain the target storage container number upper limit.

In an embodiment of the present disclosure, it is determined that the preset queuing ratio of workstation a is 50%, and the target upper limit of the number of queuing robots is 20; the preset queuing ratio is multiplied by the target upper limit of the number of queuing robots, and the threshold of the number of queuing robots is obtained to be 10; the current number of queuing robots corresponding to workstation a is obtained to be 11, and it is determined that the current number of queuing robots is greater than the threshold of the number of queuing robots; the preset storage container number upper limit corresponding to workstation a is obtained to be 30, the first adjustment threshold is obtained to be 1, and the preset storage container number upper limit of 30 is subtracted by the first adjustment threshold of 1, so that the target storage container number upper limit is obtained to be 29, where the preset storage container number upper limit of 30 and the first adjustment threshold of 1 are set for workstation a in advance according to business requirements.

When the current number of queuing robots at the target workstation is greater than the threshold of the number of queuing robots, the preset storage container number upper limit of the workstation is decreased, thus reducing the workload of the workstation with heavy work tasks.

As described above, the current number of queuing picking and transfer devices at the target workstation is greater than the threshold of the number of queuing picking and transfer devices. In practical applications, the current number of queuing picking and transfer devices is equal to 0. The processing method may specifically include:
determining the current number of storage containers corresponding to the target workstation; and
determining the target storage container number upper limit of the target workstation based on a predicted storage container number upper limit and a second adjustment threshold, when the current number of queuing picking and transfer devices of the target workstation is equal to 0 and the current number of storage containers is equal to the preset storage container number upper limit.

The current number of storage containers refers to the number of storage containers that have been transported to the workstation and the number of storage containers that are being transported to the workstation in the current processing round, that is, the current number of storage containers includes the number of storage containers that have been transported to the workstation and storage containers on the way to the workstation. The second adjustment threshold refers to an adjustment value for the preset storage container upper when the current number of queuing robots is equal to 0 and the current number of storage containers is equal to the preset storage container number upper limit. In practical applications, the value of the second adjustment threshold may be set in advance based on business requirements or obtained based on business experience data analysis.

In some embodiments, the current number of storage containers corresponding to the target workstation is obtained; it is determined that the current number of storage containers is equal to the preset storage container number upper limit, and the current number of queuing picking and transfer devices of the target workstation is equal to 0, the value of the second adjustment threshold may be added to the preset storage container number upper limit corresponding to the workstation to obtain the target storage container number upper limit.

In an embodiment of the present disclosure, it is determined that the current number of queuing robots at workstation a is equal to 0; the current number of storage containers of workstation a is obtained to be 15, which is consistent with the preset storage container number upper limit of 15; it is determined that the preset storage container number upper limit corresponding to workstation a is 15 and the second adjustment threshold is 3, and the preset storage container number upper limit of 15 is increased by 3 to obtain the target storage container number upper limit of 19.

When the current number of queuing robots at the target workstation is equal to 0 and the current number of storage containers is consistent with the preset storage container number upper limit, the preset storage container number upper limit at the workstation may be increased, thus increasing the workload of workstations with fewer work tasks.

In practical applications, the current number of queuing picking and transfer devices may be less than or equal to the threshold of the number of queuing picking and transfer devices. In this case, the preset storage container number upper limit of the workstation may be used as the target storage container number upper limit.

In some embodiments, the method further includes:
when the current number of queuing picking and transfer devices of the target workstation is less than or equal to the threshold of the number of queuing picking and transfer devices, taking the preset storage container number upper limit as the target storage container number upper limit of the target workstation.

In an embodiment of the present disclosure, it is determined that the current number of queuing robots in workstation a is 5, which is less than the threshold of the number of queuing robots, which is 10, calculated according to the preset queuing ratio and the target upper limit of the number of queuing robots. In this case, the preset storage container number upper limit corresponding to the workstation may be taken as the target storage container number upper limit, that is, the preset storage container number upper limit set for workstation a in advance may be obtained, and the preset storage container number upper limit may be taken as the target storage container number upper limit of workstation a.

In step 508, a target container pool corresponding to each workstation is determined according to the target storage container number upper limit corresponding to each workstation, a workstation with the number of storage containers less than the target storage container number upper limit is determined as the target workstation, and orders to be processed corresponding to the target container pool of the target workstation are processed.

The target order is any one of the orders to be processed.

The target container pool refers to a set of storage containers corresponding to the workstation. For example, storage containers 1, 2 and 3 corresponding to workstation a are determined from the storage containers corresponding to the orders to be processed according to the target storage container number upper limit, and the target container pool corresponding to workstation a is composed of storage containers 1, 2 and 3.

In practical applications, it is necessary to determine the usage manner of the target storage container number upper limit according to the generation manner of the target storage container number upper limit. Specifically, the target storage container number upper limit may be used to process the orders to be processed in the current round of processing tasks, and also may be used to process the orders to be processed in the next round of processing tasks, so it is necessary to determine the determination manner of the target storage container number upper limit.

In some embodiments, on the basis that the target storage container number upper limit is obtained by subtracting the value of the first adjustment threshold, it is necessary to use the target storage container number upper limit in the next round of the workstation.

Further, the method of determining the target container pool corresponding to each workstation according to the target storage container number upper limit corresponding to each workstation may include:
determining the target container pool in the next round corresponding to each workstation according to the target storage container number upper limit corresponding to each workstation.

In some embodiments, a next round order refers to an order that the workstation needs to process in the next round; and after the workstation completes a task of transferring storage containers from a warehouse to the workstation in the current round by using the preset storage container number upper limit, the target container pool is obtained in the next round by using the target storage container number upper limit.

In an embodiment of the present disclosure, workstation b determines that the current number of queuing robots is greater than the threshold of the number of queuing robots in the current round of processing, and the preset storage container number upper limit of 10 corresponding to workstation b is decreased by the first adjustment threshold of 1 to obtain the target storage container number upper limit of 9; and after workstation b completes processing the task in the current round, the storage containers, the number of which is less than or equal to the target storage container number upper limit of 9, are called in the next round.

By reducing the workload of busy workstations, the processing efficiency of workstations may be improved.

In some embodiments, on the basis that the target storage container number upper limit is obtained by adding the value of the second adjustment threshold, it is necessary to use the target storage container number upper limit in the current round of the workstation.

Further, the method of determining the target container pool corresponding to each workstation according to the target storage container number upper limit corresponding to each workstation may include:
adding a storage container corresponding to the second adjustment threshold to the target container pool corresponding to the target workstation.

In some embodiments, the number of storage containers refers to the number of storage containers contained in the target container pool corresponding to the workstation; the target workstation refers to a workstation where the number of storage containers in the corresponding target container pool is less than the target storage container number upper limit; and adding the storage container corresponding to the second adjustment threshold refers to adding the storage container in a quantity equal to the second adjustment threshold to the target container pool.

For example, when the current number of queuing robots at the workstation is equal to 0 and the current number of storage containers at the workstation is equal to the preset storage container number upper limit of the workstation, it is determined that the number of storage containers in the target container pool corresponding to the workstation needs to be increased. Specifically, the second adjustment threshold of 1 is added to the preset storage container number upper limit corresponding to the workstation, that is, the workstation may call one more storage container in the current round; it is determined that storage container 1 also needs to be moved to the workstation to complete the processing of order a to be processed, storage container 1 may be added to the target container pool corresponding to the workstation, and the storage containers in the target container pool may be processed by the workstation.

In an embodiment of the present disclosure, workstation c determines that the current number of queuing robots is equal to 0 and the current number, which is 8, of storage containers corresponding to workstation c is equal to the preset storage container number upper limit of 8 in the current round of processing, the preset storage container number upper limit of 8 corresponding to workstation c may be increased by 1 to obtain the target storage container number upper limit of 9, and based on the target storage container number upper limit of 9, nine storage containers may be obtained to generate the target container pool corresponding to the workstation; since eight storage containers have been processed in the current round, one unprocessed storage container K corresponding to the order is further determined, and workstation c processes storage container K in the current round.

In some embodiments, processing the order to be processed corresponding to the target container pool of the target workstation is the process of performing the goods unit re-hitting on the target order as shown in Fig. 2, which includes:
obtaining a target order of a target workstation and at least one order detail in the target order;
judging whether a target order detail meets an order precondition, where the target order detail is any one of the at least one order detail;
judging whether an initial goods unit of the target order detail meets a re-hitting trigger condition when the target order detail meets the order precondition; and
performing re-hitting on the target order detail when the initial goods unit meets the re-hitting trigger condition.

By increasing the workload of the workstations with fewer tasks, the processing efficiency of the workstations may be improved.

The process of determining the target order from the at least one order to be processed provided by the present disclosure includes: receiving the at least one order to be processed, where the at least one order to be processed is processed based on at least one workstation; obtaining the current number of queuing picking and transfer devices and an upper limit of the number of queuing picking and transfer devices corresponding to each workstation; determining an storage container number upper limit corresponding to each workstation based on the current number of queuing picking and transfer devices and the upper limit of the number of queuing picking and transfer devices corresponding to each workstation, to obtain a target storage container number upper limit; determining a target container pool corresponding to each workstation according to the target storage container number upper limit corresponding to each workstation, determining a workstation with the number of storage containers less than the target storage container number upper limit as the target workstation, and processing orders to be processed corresponding to the target container pool of the target workstation, where the target order is any one of the orders to be processed.

In the method provided by the present disclosure, at least one order to be processed is received, where the at least one order to be processed is processed based on at least one workstation; the current number of queuing robots and an upper limit of the number of queuing robots corresponding to each workstation are obtained; a storage container number upper limit corresponding to each workstation is determined based on the current number of queuing robots and the upper limit of the number of queuing robots corresponding to each workstation, to obtain a target storage container number upper limit; a target container pool corresponding to each workstation is determined according to the target storage container number upper limit corresponding to each workstation, and orders to be processed corresponding to each target container pool are processed.

In an embodiment of the present disclosure, the current number of queuing picking and transfer devices and the upper limit of the number of queuing picking and transfer devices corresponding to the workstation are determined, so as to determine the current processing progress of the workstation; the target storage container number upper limit is generated according to the current number of queuing picking and transfer devices and the upper limit of the number of queuing picking and transfer devices; the target container pool is then determined based on the target storage container number upper limit, and the workstation with the number of storage containers less than the target storage container number upper limit is determined as the target workstation, and the order to be processed corresponding to the target container pool of the target workstation is processed, so that the tasks of the workstations may be evenly distributed, and the utilization rate of resources and the processing efficiency of the orders to be processed may be improved.

### Embodiment 1

With reference to Fig. 6, the process of determining the target order from the at least one order to be processed shown in Fig. 5 will be further explained by taking an example of the application of the goods unit re-hitting method provided by the present disclosure when the storage container is the storage bin. Fig. 6 shows a processing flowchart of a method of determining a target order applied to a storage bin provided by an embodiment of the present disclosure, which specifically includes the following steps.

In step 602, at least one order to be processed is received, where the at least one order to be processed is processed based on at least one workstation.

In some embodiments, a target number of storage bins are selected according to a current order pool status; a target storage bin with a highest hit rate is selected from the storage bins, and an order corresponding to the target storage bin is taken as the order to be processed of the workstation.

In step 604, the current number of queuing picking and transfer devices and an upper limit of the number of queuing picking and transfer devices corresponding to each workstation are obtained.

In some embodiments, the upper limit of the number of queuing picking and transfer devices preset for each workstation is obtained; and the number of queuing picking and transfer devices at each workstation at a target moment is counted as the current number of queuing picking and transfer devices.

In step 606, based on the current number of queuing picking and transfer devices and the upper limit of the number of queuing picking and transfer devices corresponding to each workstation, a storage bin number upper limit corresponding to each workstation is determined, to obtain a target storage bin number upper limit.

In some embodiments, the current number of queuing robots corresponding to a target workstation is determined to be 10 and a target upper limit of the number of queuing robots corresponding to the target workstation is determined to be 20; a preset queuing ratio corresponding to the target workstation is obtained to be 0.4, and the target upper limit of the number of queuing robots is multiplied by the preset queuing ratio to obtain a threshold of the number of queuing robots of the target workstation, which is 8; the threshold of the number of queuing robots, which is 8, is compared with the current number of queuing robots, which is 10, it is determined that the current number of queuing robots is greater than the threshold of the number of queuing robots, a preset storage bin number upper limit corresponding to the target workstation is determined to be 25, and a first adjustment threshold of 1 is subtracted from the preset storage bin number upper limit to obtain the target storage bin number upper limit of 24; similarly, the target storage bin number upper limit corresponding to each workstation is determined based on the above manner.

In step 608, a target container pool corresponding to each workstation is determined according to the target storage bin number upper limit, and an order to be processed corresponding to each target container pool is processed.

In some embodiments, since the target storage bin number upper limit of 24 is obtained by decreasing the preset storage bin number upper limit, and a storage bin corresponding to the workstation has been locked in the current round of processing, the target workstation needs to use the target storage bin number upper limit of 24 for the next round of processing. That is, in the next round, 24 storage bins are obtained to form the target container pool by using the target storage bin number upper limit of 24, and the 24 storage bins in the target container pool are processed by the target workstation.

In the method provided by the present disclosure, the at least one order to be processed is received, where the at least one order to be processed is processed based on the at least one workstation; the current number of queuing robots and the upper limit of the number of queuing robots corresponding to each workstation are obtained; the storage bin number upper limit corresponding to each workstation is determined based on the current number of queuing robots and the upper limit of the number of queuing robots corresponding to each workstation, to obtain the target storage bin number upper limit; according to the target storage bin number upper limit, the target container pool corresponding to each workstation is determined, and the order to be processed corresponding to each target container pool is processed.

In an embodiment of the present disclosure, the current number of queuing robots and the upper limit of the number of queuing robots corresponding to the workstation are determined, so as to determine the current processing progress of the workstation; according to the current number of queuing robots and the upper limit of the number of queuing robots, the target storage bin number upper limit is generated, the target container pool is determined based on the target storage bin number upper limit, and the order to be processed corresponding to the target container pool is processed, so that the tasks of the workstations may be evenly distributed, and the utilization rate of resources and the processing efficiency of the orders to be processed may be improved.

### Embodiment 2

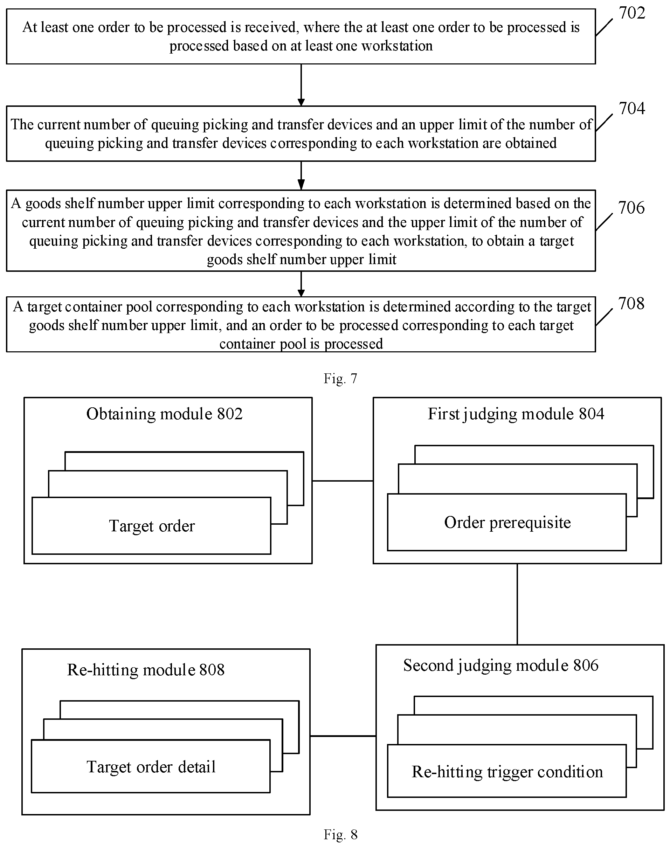

With reference to Fig. 7, taking an example that the storage container of the present disclosure is the goods shelf, the process of determining the target order from the at least one order to be processed will be further explained. Fig. 7 shows a processing flowchart of a method applied to a goods shelf provided by an embodiment of the present disclosure, which specifically includes the following steps.

In step 702, at least one order to be processed is received, where the at least one order to be processed is processed based on at least one workstation.

In some embodiments, a target number of goods shelves are selected according to a current order pool status; a target goods shelf with a highest hit rate is selected from the goods shelves, and an order corresponding to the target goods shelf is taken as the order to be processed of the workstation.

In step 704, the current number of queuing picking and transfer devices and an upper limit of the number of queuing picking and transfer devices corresponding to each workstation are obtained.

In some embodiments, the upper limit of the number of queuing picking and transfer devices preset for each workstation is obtained; and the number of queuing picking and transfer devices at each workstation at a target moment is counted as the current number of queuing picking and transfer devices.

In step 706, a goods shelf number upper limit corresponding to each workstation is determined based on the current number of queuing picking and transfer devices and the upper limit of the number of queuing picking and transfer devices corresponding to each workstation, to obtain a target goods shelf number upper limit.

In some embodiments, the current number of queuing robots corresponding to the target workstation is determined to be 0, and the current number of storage containers corresponding to the target workstation is equal to a preset storage container number upper limit of 15; and the preset storage container number upper limit of 15 is increased by a second adjustment threshold of 1 to obtain a target storage container number upper limit of 16.

In step 708, a target container pool corresponding to each workstation is determined according to the target goods shelf number upper limit, and an order to be processed corresponding to each target container pool is processed.

In some embodiments, since the target goods shelf number upper limit of 16 is obtained by increasing the preset goods shelf number upper limit, the target workstation needs to use the target goods shelf number upper limit of 16 for the current round of processing. That is, in the current round, the target goods shelf number upper limit of 16 is used to further obtain one unprocessed goods shelf in the order, and the target workstation processes the goods shelf in the current round.

In the method of determining the target order provided by the present disclosure, comprises the following steps: the at least one order to be processed is received, where the at least one order to be processed is processed based on the at least one workstation; the current number of queuing picking and transfer devices and the upper limit of the number of queuing picking and transfer devices corresponding to each workstation are obtained; the goods shelf number upper limit corresponding to each workstation is determined based on the current number of queuing picking and transfer devices and the upper limit of the number of queuing picking and transfer devices corresponding to each workstation, to obtain the target goods shelf number upper limit; the target container pool corresponding to each workstation is determined according to the target storage container number upper limit corresponding to each workstation, and the order to be processed corresponding to each target container pool is processed.

In an embodiment of the present disclosure, the current number of queuing robots and the upper limit of the number of queuing robots corresponding to the workstation, so as to determine the current processing progress of the workstation; the target goods shelf number upper limit is generated according to the current number of queuing robots and the upper limit of the number of queuing robots, then the target container pool is determined based on the target goods shelf number upper limit, and the order to be processed corresponding to the target container pool is processed, so that the tasks of the workstations may be evenly distributed, and the utilization rate of resources and the processing efficiency of the orders to be processed may be improved.

Corresponding to the above method embodiments, the present disclosure also provides an embodiment of a goods unit re-hitting device, and Fig. 8 shows a block diagram of a goods unit re-hitting device provided by an embodiment of the present disclosure. As shown in Fig. 8, the device includes:
an obtaining module 802 configured to obtain a target order of a target workstation and at least one order detail in the target order;
a first judging module 804 configured to judge whether a target order detail meets an order precondition, where the target order detail is any one of the at least one order detail;
a second judging module 806 configured to judge whether an initial goods unit of the target order detail meets a re-hitting trigger condition when the target order detail meets the order precondition; and
a re-hitting module 808 configured to perform re-hitting on the target order detail when the initial goods unit meets the re-hitting trigger condition.

In some embodiments, the first judging module 804 is further configured to:
judge whether the initial goods unit exists in the target order detail;
determine position information of a storage container to which the initial goods unit belongs when the initial goods unit exists in the target order detail;
determine the number of times that the re-hitting is performed on the target order detail when it is determined that the storage container is not in a queuing area of the target workstation;
determine a process status of a picking task corresponding to the target order detail when the number of times that the re-hitting is performed on the target order detail does not reach a preset hit number threshold; and
determine whether the target order detail meets the order precondition according to the process status of the picking task.

In some embodiments, the second judging module 806 is further configured to:
determine the position information of the storage container to which the initial goods unit belongs;
count inventory information of storage containers in the target workstation when it is determined that the storage container is not in the queuing area of the target workstation;
judge whether the inventory information meets a hit demand of the target order detail; and
determine that the initial goods unit meets the re-hitting trigger condition when the inventory information meets the hit demand.

In some embodiments, the re-hitting module 808 is further configured to:
obtain process information of an initial picking task of the target order detail;
perform a task cancellation processing on the initial picking task according to the process information;
determine a target goods unit of the target order detail in the storage containers of the target workstation based on the inventory information; and
generate a target picking task of the target order detail based on the target order detail and the target goods unit.

In some embodiments, the second judging module 806 is further configured to:
determine the position information of the storage container to which the initial goods unit belongs;
determine whether that the storage contain is in a queuing area of a reference workstation based on the position information;
calculate a waiting completion time of the storage container when the storage container is in the queuing area of the reference workstation, where the waiting completion time refers to the time required for the storage container to queue from its current position to the front and complete the picking task; and
determine that the initial goods unit meets the re-hitting trigger condition when the waiting completion time reaches a preset time threshold.

In some embodiments, the second judging module 806 is further configured to:
count the number of picking and transfer devices in the queuing area in the target workstation;
determine whether the number of picking and transfer devices reaches a preset device number threshold; and
determine the position information of the storage container to which the initial goods unit belongs when the number of picking and transfer devices does not reach the preset device number threshold.

In some embodiments, the re-hitting module 808 is further configured to:
obtain process information of an initial picking task of the target order detail and inventory information of storage containers in a storage area;
perform a task cancellation processing on the initial picking task according to the process information;
determine a target goods unit of the target order detail in the storage containers in the storage area based on the inventory information; and
generate a target picking task of the target order detail based on the target order detail and the target goods unit.

In some embodiments, the re-hitting module 808 is further configured to:
cancel the initial picking task when the initial picking task has not been sent to a control platform;
when the initial picking task is sent to the control platform and the control platform does not send an initial transfer task corresponding to the initial picking task to the picking and transfer device, cancel the initial picking task and cancel the initial transfer task;
when the initial picking task is sent to the control platform, and the control platform sends the initial transfer task corresponding to the initial picking task to the picking and transfer device, obtain position information of the picking and transfer device; and
perform the task cancellation processing on the initial picking task based on the position information of the picking and transfer device.

In some embodiments, the re-hitting module 808 is further configured to:
determine whether the picking and transfer device is in a queuing area of a workstation based on the position information of the picking and transfer device;
cancel the initial picking task, cancel the initial transfer task, and generate a return task for the picking and transfer device when the picking and transfer device is not in the queuing area of the workstation; and
cancel the initial picking task, cancel the initial transfer task, and generate the return task for the picking and transfer device when the picking and transfer device is in the queuing area of the workstation.

In some embodiments, the device further includes:
a task sending module configured to send the target picking task to a control platform.

The goods unit re-hitting device provided by the present disclosure includes: the obtaining module configured to obtain the target order of the target workstation and the at least one order detail in the target order; the first judging module configured to judge whether the target order detail meets the order precondition, where the target order detail is any one of the at least one order detail; the second judging module configured to judge whether the initial goods unit of the target order detail meets the re-hitting trigger condition when the target order detail meets the order precondition; and the re-hitting module configured to perform the re-hitting on the target order detail when the initial goods unit meets the re-hitting trigger condition.

According to the goods unit re-hitting device provided by the present disclosure, after it is determined that the initial goods unit is not an optimal processing mode for the initial picking task, the goods unit re-hitting is performed on the target order detail, so that the dynamic re-hitting optimization of the goods units of the storage containers is realized, the hit rate of the storage containers is improved, and also the hit accuracy of the goods units is improved, thereby reducing the storage container contention among the workstations and improving the picking efficiency.

The goods unit re-hitting device provided by the present disclosure further includes a receiving module, a determining module and a processing module.

The receiving module is configured to receive at least one order to be processed, where the at least one order to be processed is processed based on at least one workstation.

The obtaining module 802 is further configured to obtain the current number of queuing picking and transfer devices and an upper limit of the number of queuing picking and transfer devices corresponding to each workstation.

The determining module is configured to determine a storage container number upper limit corresponding to each workstation based on the current number of queuing picking and transfer devices and the upper limit of the number of queuing picking and transfer devices corresponding to each workstation, to obtain a target storage container number upper limit.

The processing module is configured to determine a target container pool corresponding to each workstation according to the target storage container number upper limit corresponding to each workstation, determine a workstation with the number of storage containers less than the target storage container number upper limit as the target workstation, and process orders to be processed corresponding to the target container pool of the target workstation, where the target order is any one of the orders to be processed.

In some embodiments, the determining module is further configured to:
according to a preset queuing ratio and a target upper limit of the number of queuing picking and transfer devices of the target workstation, determine a threshold of the number of queuing picking and transfer devices; and
determine a target storage container number upper limit of the target workstation based on a preset storage container number upper limit and a first adjustment threshold, when the current number of queuing picking and transfer devices of the target workstation is greater than the threshold of the number of queuing picking and transfer devices.

In some embodiments, the processing module is further configured to:
determine the target container pool for a next round corresponding to each workstation according to the target storage container number upper limit corresponding to each workstation.

In some embodiments, the determining module is further configured to:
determine the current number of storage containers corresponding to the target workstation; and
determine the target storage container number upper limit of the target workstation based on a predicted storage container number upper limit and a second adjustment threshold when the current number of queuing picking and transfer devices of the target workstation is equal to 0 and the current number of storage containers is equal to the preset storage container number upper limit.

In some embodiments, the processing module is further configured to:
add a storage container corresponding to the second adjustment threshold to the target container pool corresponding to the target workstation.

In some embodiments, the determining module is further configured to:
when the current number of queuing picking and transfer devices of the target workstation is less than or equal to the threshold of the number of queuing picking and transfer devices, take the preset storage container number upper limit as the target storage container number upper limit of the target workstation.

In some embodiments, the receiving module is further configured to:
determine a storage container set according to an order pool status;
filer at least one target storage container from the storage container set; and
take an order corresponding to each target storage container as the order to be processed.

In some embodiments, the receiving module is further configured to:
determine a preset hit rate threshold; and
select a storage container with a preset hit rate greater than the preset hit rate threshold from the storage container set as the target storage container.

In some embodiments, the device further includes an assigning module configured to:
determine a target order to be processed from at least one order to be processed corresponding to the target storage container; and
assign a picking and transfer device to the target storage container to execute the target order to be processed.

In the device provided by the present disclosure, the at least one order to be processed is received, where the at least one order to be processed is processed based on the at least one workstation; the current number of queuing picking and transfer devices and the upper limit of the number of queuing picking and transfer devices corresponding to each workstation are obtained; the storage container number upper limit corresponding to each workstation is determined based on the current number of queuing picking and transfer devices and the upper limit of the number of queuing picking and transfer devices corresponding to each workstation, to obtain the target storage container number upper limit; the target container pool corresponding to each workstation is determined according to the target storage container number upper limit corresponding to each workstation, the workstation with the number of storage containers less than the target storage container number upper limit is determined as the target workstation, and the orders to be processed corresponding to the target container pool of the target workstation are processed, where the target order is any one of the orders to be processed.

In an embodiment of the present disclosure, the current number of queuing robots and the upper limit of the number of queuing robots corresponding to the workstation are determined, so as to determine the current processing progress of the workstation; according to the current number of queuing robots and the upper limit of the number of queuing robots, the target storage container number upper limit is generated, then the target container pool is determined based on the target storage container number upper limit, and the order to be processed corresponding to the target container pool is processed, so that the tasks of the workstations may be evenly distributed, and the utilization rate of resources and the processing efficiency of the orders to be processed may be improved.

In some embodiments, the present disclosure also provides an order processing method, which includes receiving at least one order to be processed, where the at least one order to be processed is processed based on at least one workstation;
obtaining the current number of queuing robots and an upper limit of the number of queuing robots corresponding to each workstation;
determining a storage container number upper limit corresponding to each workstation based on the current number of queuing robots and the upper limit of the number of queuing robots corresponding to each workstation, to obtain a target storage container number upper limit; and
determining a target container pool corresponding to each workstation according to the target storage container number upper limit corresponding to each workstation, and processing the order to be processed corresponding to each target container pool.

In some embodiments, determining the storage container number upper limit corresponding to each workstation based on the current number of queuing robots and the upper limit of the number of queuing robots corresponding to each workstation, to obtain the target storage container number upper limit, includes:
according to a preset queuing ratio and a target upper limit of the number of queuing robots of a target workstation, determining a threshold of the number of queuing robots; and
determining a target storage container number upper limit of the target workstation based on a preset storage container number upper limit and a first adjustment threshold, when the current number of queuing robots of the target workstation is greater than the threshold of the number of queuing robots.

In some embodiments, determining the target container pool corresponding to each workstation according to the target storage container number upper limit corresponding to each workstation includes:
determining the target container pool for a next round corresponding to each workstation according to the target storage container number upper limit corresponding to each workstation.

In some embodiments, the method further includes:
determining the current number of storage containers corresponding to the target workstation; and
determining the target storage container number upper limit of the target workstation based on a predicted storage container number upper limit and a second adjustment threshold when the current number of queuing robots of the target workstation is equal to 0 and the current number of storage containers is equal to the preset storage container number upper limit.

In some embodiments, determining the target container pool corresponding to each workstation according to the target storage container number upper limit corresponding to each workstation includes:
determining a target workstation with the number of storage containers less than the target storage container number upper limit; and
adding a storage container corresponding to a second adjustment threshold to the target container pool corresponding to the target workstation.

In some embodiments, the method further includes:
when the current number of queuing robots of the target workstation is less than or equal to the threshold of the number of queuing robots, taking the preset storage container number upper limit as the target storage container number upper limit of the target workstation.

In some embodiments, receiving the at least one order to be processed includes:
determining a storage container set according to an order pool status;
filtering at least one target storage container from the storage container set; and
taking an order corresponding to each target storage container as the order to be processed.

In some embodiments, filtering the at least one target storage container from the storage container set includes:
determining a preset hit rate threshold; and
selecting a storage container with a preset hit rate greater than the preset hit rate threshold from the storage container set as the target storage container.

In some embodiments, before obtaining the current number of queuing robots and the upper limit of the number of queuing robots corresponding to each workstation, the method further includes:
determining a target order to be processed from at least one order to be processed corresponding to the target storage container; and
assigning a transfer device to the target storage container to execute the target order to be processed.

A schematic scheme of the goods unit re-hitting device of this embodiment is described above. It should be noted that the technical scheme of the goods unit re-hitting device belongs to the same concept as the technical scheme of the above goods unit re-hitting method. For details not described in detail in the technical scheme of the goods unit re-hitting device, reference may be made to the descriptions of the technical scheme of the above goods unit re-hitting method.

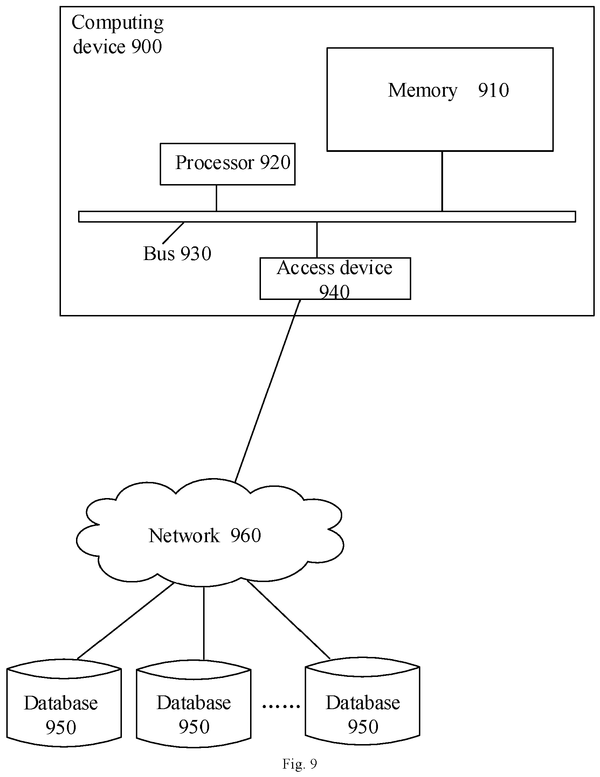

Fig. 9 shows a block diagram of a computing device 900 according to an embodiment of the present disclosure. Components of the computing device 900 include, but are not limited to, a memory 910 and a processor 920. The processor 920 and the memory 910 are connected through a bus 930, and a database 950 is configured to store data.

The computing device 900 also includes an access device 940 that enables the computing device 900 to communicate via one or more networks 960. Examples of these networks include a Public Switched Telephone Network (PSTN), a Local Area Network (LAN), a Wide Area Network (WAN), a Personal Area Network (PAN) or a combination of communication networks such as the Internet. The access device 940 may include one or more of any type of wired or wireless network interfaces (for example, a network interface controller (NIC)), such as an IEEE802.11 Wireless Local Area Network (WLAN) wireless interface, a Worldwide Interoperability for Microwave Access (Wi-MAX) interface, an Ethernet interface, a Universal Serial Bus (USB) interface, a cellular network interface, a Bluetooth interface, a Near Field Communication (NFC) interface, and so on.

In an embodiment of the present disclosure, the above components of the computing device 900 and other components not shown in Fig. 9 may also be connected to each other, for example, through a bus. It should be understood that the block diagram of the computing device shown in Fig. 9 is only for the purpose of example, and is not a limitation on the scope of the present disclosure. Those skilled in the art may add or replace other components as needed.

The computing device 900 may be any type of stationary or mobile computing device, including mobile computers or mobile computing devices (e.g., tablet computers, personal digital assistants, laptop computers, notebook computers, netbooks, etc.), mobile phones (e.g., smart phones), wearable computing devices (e.g., smart watches, smart glasses, etc.) or other types of mobile devices, or stationary computing devices such as desktop computers or Personal Computer (PCs). The computing device 600 may also be a mobile or stationary server.

The processor 920 implements the steps of the goods unit re-hitting method when executing the computer instructions.

A schematic scheme of the computing device of this embodiment is described above. It should be noted that the technical scheme of the computing device belongs to the same concept as the technical scheme of the above goods unit re-hitting method, and for details not described in detail in the technical scheme of the computing device, reference may be made to the descriptions of the technical scheme of the above goods unit re-hitting method.

An embodiment of the present disclosure also provides a computer-readable storage medium storing computer instructions which, when executed by a processor, realize the steps of the aforementioned goods unit re-hitting method.

A schematic scheme of the computer-readable storage medium of this embodiment is described above. It should be noted that the technical scheme of the storage medium belongs to the same concept as the technical scheme of the above goods unit re-hitting method. For details not described in detail in the technical scheme of the storage medium, reference may be made to the descriptions of the technical scheme of the above goods unit re-hitting method.

An embodiment of the present disclosure also provides a computer program product, including a computer program, where the computer program, when executed by a processor, realizes the steps of the aforementioned goods unit re-hitting method.

An embodiment of the present disclosure also provides a computer program, where the computer program, when executed by a processor, realizes the steps of the aforementioned goods unit re-hitting method.

Specific embodiments of the present disclosure have been described above. In some cases, actions or steps recited in the present disclosure may be performed in a different order than in the embodiments and desired results still may be achieved. In addition, the processes depicted in the drawings do not necessarily require the specific order shown or the sequential order shown to achieve the desired results. In some embodiments, multitasking and parallel processing are also possible or may be advantageous.

The computer instruction includes a computer program code, which may be in the form of a source code, an object code, or an executable file or in some intermediate forms, etc. The computer-readable medium may include any entity or device capable of carrying the computer program code, a recording medium, a U disk, a mobile hard disk, a magnetic disk, an optical disk, a computer memory, a Read-Only Memory (ROM), a Random Access Memory (RAM), an electric carrier signal, a telecommunication signal, a software distribution medium, etc.

It should be noted that for the convenience of description, all the aforementioned method embodiments are expressed as a series of action combinations, but those skilled in the art should know that the present disclosure is not limited by the described action sequence, because some steps may be performed in other sequences or at the same time according to the present disclosure. Furthermore, those skilled in the art should also know that all the embodiments described in the specification belong to illustrative embodiments, and the actions and modules involved are not necessarily required for the present disclosure.

In the above embodiments, the description of each embodiment has its own emphasis. For the parts not detailed in a certain embodiment, reference may be made to the relevant descriptions of other embodiments.

The embodiments disclosed above are only used to help illustrate the present disclosure. The foregoing embodiments do not cover all details, nor are they intended to restrict the present disclosure to the mentioned embodiments. Obviously, many modifications and changes may be made in light of the present disclosure. These embodiments are selected and described in the present disclosure in order to better explain the principle and practical application of the present disclosure, so that those skilled in the art may better understand and make use of the present disclosure. The present disclosure is limited only by the claims and their full scope and equivalents.

## Claims

1. A goods unit re-hitting method, comprising:
obtaining a target order of a target workstation and at least one order detail in the target order;
judging whether a target order detail meets an order precondition, wherein the target order detail is any one of the at least one order detail;
judging whether an initial goods unit of the target order detail meets a re-hitting trigger condition when the target order detail meets the order precondition; and
performing re-hitting on the target order detail when the initial goods unit meets the re-hitting trigger condition.

2. The method according to claim 1, wherein judging whether the target order detail meets the order precondition comprises:
judging whether the initial goods unit exists in the target order detail, wherein the initial goods unit is a goods unit that the target order detail has hit;
determining position information of a storage container to which the initial goods unit belongs when the initial goods unit exists in the target order detail;
determining the number of times that the re-hitting is performed on the target order detail when it is determined that the storage container is not in a queuing area of the target workstation;
determining a process status of a picking task corresponding to the target order detail when the number of times that the re-hitting is performed on the target order detail does not reach a preset hit number threshold; and
determining whether the target order detail meets the order precondition according to the process status of the picking task.

3. The method according to claim 1 or 2, wherein judging whether the initial goods unit of the target order detail meets the re-hitting trigger condition comprises:
determining position information of a storage container to which the initial goods unit belongs;
counting inventory information of storage containers in the target workstation when it is determined that the storage container is not in a queuing area of the target workstation;
judging whether the inventory information meets a hit demand of the target order detail; and
determining that the initial goods unit meets the re-hitting trigger condition when the inventory information meets the hit demand.

4. The method according to claim 3, wherein performing the re-hitting on the target order detail comprises:
obtaining process information of an initial picking task of the target order detail;
performing a task cancellation processing on the initial picking task according to the process information;
determining a target goods unit of the target order detail in the storage containers of the target workstation based on the inventory information; and
generating a target picking task of the target order detail based on the target order detail and the target goods unit.

5. The method according to any one of claims 1 to 4, wherein judging whether the initial goods unit of the target order detail meets the re-hitting trigger condition comprises:
determining position information of a storage container to which the initial goods unit belongs;
determining whether the storage contain is in a queuing area of a reference workstation based on the position information;
calculating a waiting completion time of the storage container when the storage container is in the queuing area of the reference workstation, wherein the waiting completion time refers to the time required for the storage container to queue from its current position to the front and complete a picking task; and
determining that the initial goods unit meets the re-hitting trigger condition when the waiting completion time reaches a preset time threshold.

6. The method according to any one of claims 2, 3 and 5, wherein determining the position information of the storage container to which the initial goods unit belongs comprises:
counting the number of picking and transfer devices in a queuing area of the target workstation;
determining whether the number of picking and transfer devices reaches a preset device number threshold; and
determining the position information of the storage container to which the initial goods unit belongs when the number of picking and transfer devices does not reach the preset device number threshold.

7. The method according to claim 5, wherein performing the re-hitting on the target order detail comprises:
obtaining process information of an initial picking task of the target order detail and inventory information of storage containers in a storage area;
performing a task cancellation processing on the initial picking task according to the process information;
determining a target goods unit of the target order detail in the storage containers in the storage area based on the inventory information; and
generating a target picking task of the target order detail based on the target order detail and the target goods unit.

8. The method according to claim 4 or 7, wherein performing the task cancellation processing on the initial picking task according to the process information comprises:
cancelling the initial picking task when the initial picking task has not been sent to a control platform;
when the initial picking task is sent to the control platform and the control platform does not send an initial transfer task corresponding to the initial picking task to a picking and transfer device, cancelling the initial picking task and cancelling the initial transfer task;
when the initial picking task is sent to the control platform, and the control platform sends the initial transfer task corresponding to the initial picking task to the picking and transfer device, obtaining position information of the picking and transfer device; and
performing the task cancellation processing on the initial picking task based on the position information of the picking and transfer device.

9. The method according to claim 8, wherein performing the task cancellation processing on the initial picking task based on the position information of the picking and transfer device comprises:
determining whether the picking and transfer device is in a queuing area of a workstation based on the position information of the picking and transfer device;
when the picking and transfer device is not in the queuing area of the workstation, cancelling the initial picking task, cancelling the initial transfer task, and generating a return task for the picking and transfer device; and
when the picking and transfer device is in the queuing area of the workstation, cancelling the initial picking task, cancelling the initial transfer task, and generating the return task for the picking and transfer device.

10. The method according to claim 4 or 7, wherein after generating the target picking task of the target order detail, the method further comprises:
sending the target picking task to a control platform.

11. The method according to any one of claims 1 to 10, wherein before obtaining the target order of the target workstation, the method comprises:
receiving at least one order to be processed, wherein the at least one order to be processed is processed based on at least one workstation;
obtaining the current number of queuing picking and transfer devices and an upper limit of the number of queuing picking and transfer devices corresponding to each workstation;
determining a storage container number upper limit corresponding to each workstation based on the current number of queuing picking and transfer devices and the upper limit of the number of queuing picking and transfer devices corresponding to each workstation, to obtain a target storage container number upper limit; and
determining a target container pool corresponding to each workstation according to the target storage container number upper limit corresponding to each workstation, determining a workstation with the number of storage containers less than the target storage container number upper limit as the target workstation, and processing orders to be processed corresponding to the target container pool of the target workstation, wherein the target order is any one of the orders to be processed.

12. The method according to claim 11, wherein determining the storage container number upper limit corresponding to each workstation based on the current number of queuing picking and transfer devices and the upper limit of the number of queuing picking and transfer devices corresponding to each workstation, to obtain the target storage container number upper limit, comprises:
according to a preset queuing ratio of the target workstation and a target upper limit of the number of queuing picking and transfer devices, determining a threshold of the number of queuing picking and transfer devices; and
determining a target storage container number upper limit of the target workstation based on a preset storage container number upper limit and a first adjustment threshold when the current number of queuing picking and transfer devices of the target workstation is greater than the threshold of the number of queuing picking and transfer devices.

13. The method according to claim 12, wherein determining the target container pool corresponding to each workstation according to the target storage container number upper limit corresponding to each workstation comprises:
determining the target container pool for a next round corresponding to each workstation according to the target storage container number upper limit corresponding to each workstation.

14. The method according to claim 12, wherein the method further comprises:
determining the current number of storage containers corresponding to the target workstation; and
determining the target storage container number upper limit of the target workstation based on a predicted storage container number upper limit and a second adjustment threshold when the current number of queuing picking and transfer devices of the target workstation is equal to 0 and the current number of storage containers is equal to the preset storage container number upper limit.

15. The method according to claim 14, wherein determining the target container pool corresponding to each workstation according to the target storage container number upper limit corresponding to each workstation comprises:
adding a storage container corresponding to the second adjustment threshold to the target container pool corresponding to the target workstation.

16. The method according to claim 12, wherein the method further comprises:
when the current number of queuing picking and transfer devices of the target workstation is less than or equal to the threshold of the number of queuing picking and transfer devices, taking the preset storage container number upper limit as the target storage container number upper limit of the target workstation.

17. The method according to any one of claims 11 to 17, wherein receiving the at least one order to be processed comprises:
determining a storage container set according to an order pool status;
filtering at least one target storage container from the storage container set; and
taking an order corresponding to each target storage container as the order to be processed.

18. The method according to claim 17, wherein filtering the at least one target storage container from the storage container set comprises:
determining a preset hit rate threshold; and
selecting a storage container with a preset hit rate greater than the preset hit rate threshold from the storage container set as the target storage container.

19. The method according to claim 17, wherein before obtaining the current number of queuing picking and transfer devices and the upper limit of the number of queuing picking and transfer devices corresponding to each workstation, the method further comprises:
determining a target order to be processed from the at least one order to be processed corresponding to the target storage container; and
assigning a picking and transfer device to the target storage container to execute the target order to be processed.

20. A goods unit re-hitting device, comprising:
an obtaining module configured to obtain a target order of a target workstation and at least one order detail in the target order;
a first judging module configured to judge whether a target order detail meets an order precondition, wherein the target order detail is any one of the at least one order detail;
a second judging module configured to judge whether an initial goods unit of the target order detail meets a re-hitting trigger condition when the target order detail meets the order precondition; and
a re-hitting module configured to perform re-hitting on the target order detail when the initial goods unit meets the re-hitting trigger condition.

21. A computing device, comprising a memory, a processor and computer instructions stored in the memory and executable on the processor, wherein the processer is configured to perform the steps of the method according to any one of claims 1 to 19, when executing the computer instructions.

22. A computer-readable storage medium storing computer instructions, wherein the computer instructions are configured to perform the steps of the method according to any one of claims 1 to 19, when executed by a processor.

23. A computer program product, comprising a computer program, wherein the computer program is configured to perform the method according to any one of claims 1 to 19, when executed by a processor.

24. A computer program, which is configured to perform the method according to any one of claims 1 to 19, when executed by a processor.
